(19) Europäisches Patentamt
European Patent Office
Office européen des brevets

(11) **EP 2 838 960 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(21) Anmeldenummer: **13722312.9**

(22) Anmeldetag: **19.04.2013**

(51) Int Cl.:
*C09C 3/12* (2006.01)   *C09C 1/00* (2006.01)
*C09C 1/30* (2006.01)   *C09C 1/62* (2006.01)
*C09C 1/64* (2006.01)

(86) Internationale Anmeldenummer:
**PCT/EP2013/058215**

(87) Internationale Veröffentlichungsnummer:
**WO 2013/156615 (24.10.2013 Gazette 2013/43)**

(54) **VERFAHREN ZUR OBERFLÄCHENMODIFIZIERUNG VON PARTIKELN**

METHOD FOR MODIFYING THE SURFACE OF PARTICLES

PROCÉDÉ DE MODIFICATION DE SURFACE DE PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2012 DE 102012103505**

(43) Veröffentlichungstag der Anmeldung:
**25.02.2015 Patentblatt 2015/09**

(73) Patentinhaber:
• **Schlenk Metallic Pigments GmbH**
  **91154 Roth - Barnsdorf (DE)**
• **Fraunhofer Gesellschaft zur Förderung der angewandten Forschung e.V.**
  **80686 München (DE)**

(72) Erfinder:
• **SCHAUER, Thadeus**
  **75382 Neuhengstett (DE)**
• **ENTENMANN, Marc**
  **70734 Fellbach (DE)**
• **WÜHR, Andreas**
  **90439 Nürnberg (DE)**
• **AKTAS, Lukas**
  **71732 Tamm (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
EP-A1- 2 157 053       WO-A1-2010/043530
WO-A1-2012/032099     US-A1- 2004 226 480

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Oberflächenmodifizierung von pulverförmigen Partikeln mit Hilfe von Silanverbindungen, kurz auch Silanisierung genannt.

Silanisierungen von Partikeloberflächen werden im Stand der Technik in unterschiedlichsten Ausführungsformen durchgeführt. So wird beispielsweise die Modifizierung von Effektpigmenten mit Alkylsilanen genutzt, um eine oberflächliche Anreicherung und Ausrichtung der Pigmente in einem Lacksystem zu erreichen sowie um bei Effektpigmenten auf Basis von Metallen zusätzlich einen Schutz des Pigments vor Korrosion zu ermöglichen. Bei den eher hydrophilen Perlglanzpigmenten auf Basis von Mica kann eine Silanisierung der Oberfläche vorgenommen werden, um die Wasseraufnahme bei Feuchtebelastung zurückzudrängen.

In der EP 0 634 459 A2 ist eine Modifizierung von Perlglanzpigmenten mit Alkylsilanen beispielhaft beschrieben. Das dort angewandte Modifizierungsverfahren steuert das Benetzungsverhalten der Perlglanzpigmente durch das Einbringen von hydrophobierenden Alkylsilanen und führt zu einem so genannten Leafing-Verhalten. Nachteilig bei diesem Verfahren ist jedoch die teilweise schlechte Benetzbarkeit der Pigmente, vor allem in wässrigen Bindemittelsystemen, was sich dann in einer schlechten Performance der resultierenden Lacke, insbesondere in einer schlechten Schwitzwasserbeständigkeit und in Haftungsproblemen, äußert.

Da eine Oberflächenmodifizierung ausschließlich mit Silankomponenten zu Kompatibilitätsproblemen in Beschichtungssystemen mit polymeren Bindemittelkomponenten oder Additiven führen kann, wurde schon versucht, zusätzlich organische Polymere in die Oberflächenmodifizierung mit Silanen zu integrieren. Eine besondere Bedeutung kommt diesem Aspekt bei Effektpigmenten auf Basis von Metallen zu, da hier zusätzlich auf den Korrosionsschutz des Metallplättchens geachtet werden muss.

In der WO 2008/095697 A1 sind Kunstharzüberzüge von Effektpigmenten mit Polyacrylaten, Polymethacrylaten und organofunktionellen Silanen beschrieben, wodurch sich elektrisch nicht leitende, sowie Chemikalien- und korrosionsbeständige Pigmente erhalten lassen. In vielen Beschichtungen werden in der Tat acrylatbasierende Polymere als Bindemittel eingesetzt, so dass eine Acrylat-Funktionalisierung einer Pigmentmodifizierung für die Kompatibilisierung der resultierenden Pigmente in der Beschichtung durchaus vorteilhaft sein kann. Das in der WO 2008/095697 A1 beschriebene Verfahren nutzt zwar reaktive Acrylate und Silankomponenten, kommt jedoch nicht ohne die Verwendung von relativ großen Mengen Lösemittel in Form von Testbenzin als Lösemittel aus, so dass die resultierenden Pigmente nachträglich abfiltriert und gereinigt werden müssen. Ein weiterer Nachteil ist, dass sich nach diesem Verfahren kaum Pigmente in Pulverform erhalten lassen, da das für die Prozesse verwendete Lösemittel Testbenzin sich nur schwer entfernen lässt, so dass es erfahrungsgemäß in bestimmten Beschichtungen zu Lackstörungen, Benetzungsschwierigkeiten und letztlich einem Ausschwimmen des Pigments kommen kann. Auch gewisse härteerniedrigende Effekte auf die Beschichtungen sind durch die Verwendung hochsiedender Testbenzine teilweise zu befürchten.

In der EP 0 688 833 A2 sind ebenfalls Beschichtungen aus Silankomponenten und funktionalisierten organischen Polymeren zur Verbesserung der Beständigkeit von Effektpigmenten auf Basis von Metallen gegenüber Feuchtigkeit und wässrigen Lackformulierungen beschrieben. Vorteilhaft dürfte insbesondere der ausgeprägte Polyurethan-Polyacrylatcharakter und damit verbunden eine gute Benetzbarkeit in vielen kommerziell verfügbaren, auf Polyurethan basierenden, witterungsstabilen Lacksystemen sein.

Das in der EP 0 688 833 A2 beschriebene Verfahren ist jedoch aufwändig, da die Silanbeschichtung zunächst in einem wässrigen Medium durchgeführt wird und das Pigment vor Umsetzung mit dem Isocyanat-funktionalen reaktiven Polymer in einer relativ großen Menge Lösemittel vollständig von Wasser befreit und insbesondere getrocknet werden muss. Gegebenenfalls ist es zusätzlich notwendig, das zur Modifizierung notwendige Isocyanat-funktionalisierte Polymer in einem vorgelagerten Schritt zu synthetisieren.

In der EP 0 477 433 A2 wird empfohlen, in einem ersten Schritt in einem Lösemittel eine Oberflächenmodifizierung mit funktionalen Silankomponenten durchzuführen, welche in einem zweiten Schritt, ohne einen Wechsel des Lösemittels, durch eine Modifizierung mit organischen Komponenten, komplettiert wird. Die durch diese Methode erhaltenen Pigmente können in der Tat gute Barriereeigenschaften gegenüber wässrigen, korrosiven Agenzien aufweisen, da sowohl die Silankomponente als auch die zur Modifizierung verwendeten mehrfachfunktionellen organischen, monomeren Komponenten hohe Vernetzungsgrade erlauben. Die Verwendung von wiederum größeren Mengen an Lösemittel, wie z.B. Testbenzin, im Prozess muss jedoch aufgrund der bereits erwähnten Aspekte als nachteilig beurteilt werden. Zudem erscheinen die Verfahrenszeiten von mehreren Stunden Dauer bei erhöhter Temperatur für den zweiten Verfahrensschritt der Modifizierung in Bezug auf die ökonomische Effizienz des Verfahrens sehr ungünstig.

Günstiger ist diesbezüglich das in der EP 1 812 519 A2 beschriebene Verfahren, welches eine Oberflächenmodifizierung bei Metalleffektpigmenten in Isopropanol unter Verwendung von beispielsweise Tetraethoxysilan, sowie doppelbindungsfunktionellen Silanen und radikalisch polymerisierbaren Komponenten beschreibt, wodurch letztlich Metalleffektpigmente mit einer Beschichtung versehen werden, welche ein anorganisches Netzwerk, sowie eine chemisch daran gebundene polymere oder oligomere organische Komponente aufweist. Da die Oberflächenmodifizierung in flüssiger Phase durchgeführt wird, sind wiederum aufwändige Filtrations- und Trockenprozesse notwendig. Ungünstig erscheinen hier deshalb zum einen der relativ hohe Anteil von Isopropanol und zum anderen die Bildung eines dominanten anorganischen Netzwerkes zu sein, an welches die organische Komponente, vorzugsweise unter Verwendung geeigneter Silankomponenten angebunden wird.

In der EP 1 084 198 A1 sind oberflächenmodifizierte Metalleffektpigmente beschrieben, bei welchen durch ein reaktives Oberflächenmodifizierungsmittel, welches eine chemische Anbindung der Modifizierungsschicht an die Metalloberfläche erlaubt, beispielsweise eine Silankomponente, eine Fixierung der Modifizierungsschicht gewährleistet wird. Nachteilig ist hier, dass die Oberfläche des Metallpigments und die Modifizierung aufeinander chemisch abgestimmt werden müssen, um eine entsprechende chemische Anbindung zu gewährleisten, was das Verfahren in seinen Anwendungen stark begrenzt, da nur spezielle Partikeloberflächen sich für das Verfahren eignen.

In der WO 2005/075578 A2 sind bereits Oberflächenmodifizierungen bestehend aus Silan- und speziellen Polymeren, den LCST-Polymeren, beschrieben worden, welche durch die resultierende Balance zwischen den hydrophoben/ hydrophilen Eigenschaften spezielle Charakteristika aufweisen, die durch konventionelle, auf Silanen basierende Nachbeschichtungen nicht oder nur zum Teil realisierbar sind.

Die WO 2010/063430 A1 nutzt insbesondere zusätzlich die kompatibilisierende Wirkung flüssiger LCST-Polymere bei der Silanbeschichtung aus, um eine homogene und geschlossene Nachbeschichtung auf Partikeln zu erreichen. Da bei beiden Schritten der LCST-Oberflächenmodifizierung bereits Oligomere oder Polymere in Kombination mit Silanen verwendet werden, ist die Vernetzungsdichte im Vergleich zur Verwendung von monomeren reaktiven organischen Komponenten erniedrigt, was zu einer Limitierung der für Effektpigmente auf Basis von Metallen wichtigen Barriereeigenschaften führt. Ferner sind durch die spezielle hydrophobe/hydrophile Balance der LCST-Polymere die Möglichkeiten zur Hydrophobierung der Partikeloberfläche begrenzt, wobei gerade dieser Aspekt in Hinblick auf eine Stabilisierung der Metallpigmente gegenüber wässrigen korrosiven Agenzien oft wünschenswert ist.

Aufgabe der Erfindung ist es, das eingangs genannte Verfahren so weiterzubilden, dass eine Oberflächenmodifizierung wirtschaftlicher durchgeführt werden kann.

Diese Aufgabe wird durch ein Verfahren mit den Merkmalen des Anspruchs 1 gelöst.

Das erfindungsgemäße Verfahren erlaubt, wenn erforderlich, den Einsatz von insbesondere monofunktionellen Alkoholen als Lösemittel, die wesentlich umweltverträglicher sind als die bislang eingesetzten Kohlenwasserstoffe.

Typischerweise hat die Reaktionsmischung den Charakter einer Lösung.

Das erfindungsgemäße Verfahren erlaubt es ferner, nun bei Oberflächenmodifizierungen von Partikeln mittels Umsetzen einer Silankomponente mit einer alkoholischen Reaktivkomponente die Menge von flüchtigen Komponenten auf ein zur Benetzung der Partikel erforderliches Mindestmaß zurückzudrängen oder gegebenenfalls ganz zu vermeiden, so dass das gesamte Modifizierungsverfahren mit einem minimalen energetischen Aufwand durchgeführt werden kann. Durch die Verminderung an flüchtigen Bestandteilen in dem erfindungsgemäßen Verfahren wird auch der Zeitbedarf für die Oberflächenmodifikation minimiert, da der Trocknungsaufwand deutlich geringer ausfällt oder sogar ganz vermieden wird.

Das erfindungsgemäße Verfahren erlaubt es auch in besonders bevorzugten Ausführungsformen direkt und ohne zusätzliche Verfahrensschritte eine Partikelpräparation herzustellen, die direkt in Pulverform anfällt und in dieser Form direkt weiterverarbeitet werden kann.

Eine wesentliche Funktion von Lösemitteln, die gegebenenfalls auch bei dem erfindungsgemäßen Verfahren zum Einsatz kommen können, ist es, zum Einen die Benetzung der zu beschichtenden Partikel zu gewährleisten, zum Anderen kann damit die Silankomponente verdünnt werden, um in Hinblick auf die unterschiedliche Reaktivität der möglichen Silankomponenten die Geschwindigkeit der Silanvernetzung sowie die Auffällung der dabei gebildeten Reaktionsprodukte auf die Partikeloberflächen zu steuern.

Je nach Art der zu modifizierenden Partikel und deren spezifischer Partikeloberfläche ist es mit Hilfe des erfindungsgemäßen Verfahrens auch bevorzugt möglich, wie oben schon erwähnt, vollkommen auf Lösemittel zu verzichten, wobei dann insbesondere flüssige, mehrfachfunktionelle Alkohole als Reaktivlösemittel und Reaktivverdünner für die nachfolgende Silanisierung der Partikeloberfläche eingesetzt werden.

Gegenüber den in der EP 0 477 433 A2, der EP 1 084 198 A1 und der EP 1 812 519 A2 beschriebenen Verfahren kann gemäß der vorliegenden Erfindung in einer ersten Phase zunächst die Pigmentoberfläche in ihrer ursprünglichen Form oder gegebenenfalls in oxidisch vorbehandelter Form mit einer reaktiven mehrfachfunktionellen Alkoholkomponente benetzt und erst dann nachträglich mit einer Silankomponente in Kontakt gebracht werden, welche auch durchaus ein Tetraalkyloxysilan sein kann, so dass dann nachfolgend eine chemische Umsetzung von Silankomponente und der reaktiven Alkoholkomponente erfolgt.

So wird erfindungsgemäß in der ersten Phase kein rein anorganisches, sondern ein Silan- bzw. Siliziumorganisches Hybrid-Netzwerk aufgebaut, welches jedoch bevorzugt keine polymeren oder oligomeren organischen, sondern monomere organische Verbindungen enthält. Dieser Unterschied ergibt sich auch gegenüber den aus der WO 2008/095697 A1 und der EP 0 688 833 A2, bei denen organische polymere Anteile in einer silanfunktionellen Beschichtung vorliegen. Durch die erfindungsgemäße Verfahrensweise kann die Menge des verwendeten monofunktionellen Alkohols drastisch reduziert werden.

Bei einer optional oxidischen Vorbehandlung der Pigmente wird typischerweise eine in sich abgeschlossene Oxidschicht an der Pigmentoberfläche erzielt. Auf dieser Oxidschicht wird in einem nachfolgenden Schritt die erfindungsgemäße Beschichtung getrennt aufgebracht.

Eine chemische, d.h. kovalente Anbindung der erfindungsgemäßen Beschichtung an die ursprüngliche oder oxidisch vorbehandelte Pigmentoberfläche ist erfindungsgemäß nicht notwendig, da erfindungsgemäß eine Vernetzung innerhalb der Beschichtung ausreichend ist.

Gemäß einer bevorzugten Variante des erfindungsgemäßen Verfahrens kann bei der Verwendung von mehrfachfunktionellen Alkoholen in der ersten Phase sogar gänzlich auf die Verwendung von monofunktionellen flüchtigen Alkoholen und somit auf Lösemittel insgesamt verzichtet werden.

An die in der ersten Verfahrensstufe erfindungsgemäß erhaltene modifizierte Oberfläche der Partikelpräparation kann dann optional in einer zweiten Verfahrensstufe, entsprechend der Funktionalisierung des in der ersten Verfahrensstufe verwendeten Silans, eine weitere Modifizierung auch unter Bildung und chemischer Anknüpfung polymerer und/oder oligomerer organischer Verbindungen vorgenommen werden.

Das Verfahren der vorliegenden Erfindung ist auch günstiger gegenüber dem in der EP 1 084 198 A2 beschriebenen Verfahren, da es eine Umhüllung der Pigmentpartikel und gegebenenfalls eine Vernetzung in der Modifizierungsschicht erlaubt und keine direkte Anbindung an die Oberfläche benötigt, was bei dem erfindungsgemäßen Verfahren durch die mehrfachfunktionelle Alkoholkomponente, welche nach der Benetzung der Oberfläche mit einer Silankomponente umgesetzt wird, erreicht werden kann wie im Folgenden noch eingehender beschrieben wird. Das erfindungsgemäße Verfahren ist somit zur Modifizierung unterschiedlichster Partikeloberflächen einsetzbar.

Vorzugsweise werden die pulverförmigen Partikel zunächst mit der flüssigen alkoholischen Komponente oder einem ihrer Bestandteile, sei es die alkoholische Reaktivkomponente oder die monofunktionelle, leichter flüchtige Alkoholkomponente, gemischt. Vorzugsweise wird in einem solchen Schritt eine im Wesentlichen vollständige Benetzung der Partikeloberflächen erzielt.

Die Silankomponente wird bevorzugt erst danach zu der Mischung von Partikeln und alkoholischer Komponente hinzugegeben. Dies hat den Vorteil, dass die Partikel beim Beginn der Reaktion zwischen der alkoholischen Reaktivkomponente und der Silankomponente mit der alkoholischen Komponente benetzt vorliegen und damit eine besonders gleichmäßige Ablagerung der Reaktionsprodukte auf den bereits vorbenetzten Partikeloberflächen erzielt werden kann. Auch kann man damit die Bildung von ungebundenen Reaktionsprodukten, die Ausflocken können, zurückdrängen.

Zu vermeiden ist ein direkter Kontakt der Partikel mit der Silankomponente ohne die alkoholische Komponente, da hier typischerweise eine inhomogene Verteilung zu beobachten ist und die Silankomponente mit der Partikeloberfläche reagieren und insbesondere auch kondensierte Silanverbindungen als Nebenprodukte bilden kann, was im Rahmen der vorliegenden Erfindung unerwünscht ist.

Monofunktionelle, leichter flüchtige Alkoholkomponenten dienen erfindungsgemäß, falls erforderlich, im Wesentlichen nur als Benetzungshilfe und Homogenisierungshilfe. Dies kann insbesondere für feinteilige Partikel von Bedeutung sein. Damit ist es auch möglich, die Partikel in einem vorgelagerten Schritt bei einer Mindesttemperatur, welche ein nahezu vollständiges Verdampfen der monofunktionellen leichter flüchtigen Alkoholkomponente erlaubt, in geeigneten Mischaggregaten mit der alkoholischen Reaktivkomponente und der Silankomponente vorzumischen. Hierbei werden in dem Mischvorgang gleichzeitig eine gleichmäßige vollständige Benetzung der Partikeloberflächen und das Verdampfen der nur als Hilfsmittel verwendeten leichtflüchtigen Alkoholkomponente erzielt, so dass die Verfahrensdauer minimiert wird.

Wird das Verfahren in dieser Weise durchgeführt, so empfiehlt es sich, als alkoholische Reaktivkomponente eine mehrfachfunktionelle Alkoholkomponente zu verwenden, die wesentlich schwerer verdampfbar, bzw. schwerer flüchtig, ist als die monofunktionelle Komponente. Als flüssige alkoholische Komponenten werden deshalb bevorzugt Mischungen von leichter flüchtigen monofunktionellen Alkoholen mit Siedepunkten (bei Atmosphärendruck) von ca. 100 °C oder weniger und der alkoholischen Reaktivkomponente in Form von schwerer flüchtigen mehrfachfunktionellen Alkoholen mit Siedepunkten (bei Atmosphärendruck) von ca. 150 °C oder mehr verwendet, insbesondere Mischungen von monofunktionellen leichter flüchtigen Alkoholen mit schwerer flüchtigen Diolen und/oder Triolen.

Bevorzugt zu verwendende monofunktionelle Alkohole sind generell $C_1$-$C_{10}$-basierende Alkohole, insbesondere Ethanol, Isopropanol, n-Propanol und n-Butanol.

Bevorzugte multifunktionelle Alkohole sind $C_2$-$C_{10}$-basierende Alkohole, insbesondere 1,3-Propandiol, 1,4-Butandiol, 1,5-Pentandiol und 1,6-Hexandiol.

Generell ermöglicht das erfindungsgemäße Verfahren, auf unter Umständen bedenkliche Lösemittel wie z.B. das oft gewässergefährdende Testbenzin oder gesundheits- und umweltbelastende Lösemittel wie Butylacetat, Methylethylketon oder Toluol zu verzichten. Da einige dieser Lösemittel, wie beispielsweise Testbenzin oder Toulol sich nicht einvernetzen, sich jedoch oftmals in die Oberflächenbeschichtung einlagern und so die Barriereeigenschaften gegenüber aggressiven Agenzien und Wasser erniedrigen, ergeben sich aus dem erfindungsgemäßen Verfahren, welches die Vermeidung dieser gebräuchlichen Lösemittel ermöglicht, weitere entscheidende Vorteile.

Gemäß einer bevorzugten Variante des erfindungsgemäßen Verfahrens, die insbesondere bei Partikelgehalten von ca. 50 Gew.-% oder mehr zur Anwendung gelangt, wird die flüssige alkoholische Komponente im Wesentlichen vollständig durch einen oder mehrere mehrfachfunktionelle Alkohole gebildet, die als Reaktivkomponente bei der Umsetzung mit der Silankomponente gebunden werden, so dass das erfindungsgemäße Verfahren pulverförmige Partikelpräparationen mit Gehalten der ursprünglich eingesetzten pulverförmigen Partikeln von ca. 35 Gew.-% bis ca. 99,98 Gew.-%, insbesondere ca. 48 Gew.-% bis ca. 98,5 Gew.-% und weiterhin bevorzugt ca. 70 Gew.-% bis ca. 98,5 Gew.-% ergibt.

Die bei diesen Varianten des erfindungsgemäßen Verfahrens als eine Art Reaktivverdünner fungierenden, bei der Durchführungstemperatur bevorzugt flüssigen, mehrfachfunktionellen Alkohole steuern im ersten Schritt des erfindungsgemäßen Verfahrens im Wesentlichen die Benetzung und fördern die homogene Verteilung der reaktiven Silane in Bezug auf die pulverförmigen Partikel und werden nachfolgend in der Modifizierungsschicht der abgelagerten Reaktionsprodukte chemisch fixiert.

Bei dem erfindungsgemäßen Verfahren kann der Gehalt der alkoholischen Reaktivkomponente in Form der mehrfachfunktionellen Alkohole als Bestandteil der flüssigen alkoholischen Komponente über einen großen Bereich, beispielsweise von ca. 0,3 Gew.-% bis 100 Gew.-%, variiert werden. Insbesondere wird die alkoholische Reaktivkomponente mit einem Anteil von ca. 35 Gew.-% bis ca. 100 Gew.-% verwendet, weiter bevorzugt mit einem Anteil im Bereich von ca. 90 Gew-% bis ca. 100 Gew.-%.

Da die Löslichkeit eines mehrwertigen Alkohols im monofunktionellen Alkohol oftmals mit niedriger liegendem Schmelzpunkt zunimmt, ist die Verwendung von mehrfachfunktionellen Alkoholen mit Schmelzpunkten von ca. 280°C oder weniger bevorzugt. Insbesondere werden beim erfindungsgemäßen Verfahren mehrfachfunktionelle Alkohole mit Schmelzpunkten von ca. 80°C oder weniger, weiter bevorzugt von ca. 60°C oder weniger und am meisten bevorzugt mit Schmelzpunkten von ca. 25°C oder weniger verwendet, da dann die Wahl der Verfahrenstemperatur allein an den Erfordernissen der Umsetzung der Silankomponente mit der Reaktivkomponente ausgerichtet werden kann. Ein vergleichsweise niedriger Schmelzpunkt der mehrfachfunktionellen Alkohole schafft einen größeren Spielraum bei der Wahl der Prozesstemperatur und begünstigt auch einen möglichst geringen Einsatz an monofunktioneller Alkoholkomponente.

Da das erfindungsgemäße Verfahren in allen Varianten in großem Umfang oder gar ganz auf Lösemittel verzichten kann, sind keine herkömmlich üblichen zusätzlichen Filter- und Trocknungsschritte für die erhaltene Partikelpräparation notwendig, und die erfindungsgemäßen Verfahren können mit einem deutlich reduzierten Zeitaufwand von ca. 15 bis ca. 30 min, anstelle von mehreren Stunden bei konventionellen Silanbeschichtungen, durchgeführt werden.

Ferner wird bei der Durchführung des Verfahrens eine Emission von Dämpfen in großem Umfang oder sogar weitgehend vermieden, so dass das erfindungsgemäße Verfahren nicht nur als äußerst energieeffizient, sondern auch als umweltfreundlich zu bezeichnen ist.

Beim bevorzugten erfindungsgemäßen Verfahren wird eine Silankomponente verwendet, die eine oder mehrere monomere reaktive Silankomponenten enthält, welche insbesondere aus Alkoxysilanverbindungen ausgewählt werden.

Die Verwendung dieser Silankomponenten mit den multifunktionellen Alkoholkomponenten ergibt infolge der bezogen auf die Molekülmasse hohen Funktionalitäten der Reagenzien prinzipiell hohe Vernetzungsdichten in den gebildeten, auf der Oberfläche der Partikel abgelagerten Reaktionsprodukten.

Hierdurch wird insbesondere die Barriereeigenschaft der so erzeugten Beschichtung der (Pigment-)Partikel gegenüber aggressiven Agenzien verbessert, was besonders für Metallpartikel aber auch bei Perlglanzpigmenten auf Mica-Basis wichtig ist.

Ausreichend stark vernetzte Beschichtungen aus auf der Partikeloberfläche abgeschiedenen Reaktionsprodukten aus Silankomponenten und der alkoholischen Reaktivkomponente lassen sich mit dem erfindungsgemäßen Verfahren so oftmals schon in einer einzigen Verfahrensstufe erreichen.

Um hierbei eine möglichst hohe Vernetzungsdichte der an der Oberfläche abgelagerten Reaktionsprodukte zu erreichen, ist es bevorzugt, möglichst niedermolekulare mehrfachfunktionelle Alkohole mit Molekulargewichten von ca. 400 g/mol oder weniger zu verwenden. Insbesondere werden mehrfachfunktionelle Alkohole mit Molekulargewichten von ca. 250 g/mol oder weniger und weiter bevorzugt mehrfachfunktionelle Alkohole mit Molekulargewichten von ca. 160 g/mol oder weniger verwendet.

Vorteilhaft auf die Reaktivität der mehrfachfunktionellen Alkohole kann sich beim erfindungsgemäßen Verfahren die Zugabe geringer Mengen von Stickstoff-, insbesondere aminofunktionellen organischen Verbindungen auswirken. Um besonders hohe Vernetzungsdichten in den auf der Oberfläche der Partikel abgelagerten Reaktionsprodukte zu erreichen, wird der flüssigen alkoholischen Komponente bevorzugt ein Anteil von ca. 0,1 Gew.-% bis ca. 500 Gew.-%, insbesondere ca. 1 Gew.-% bis ca. 200 Gew.-% und weiter bevorzugt mit ca. 10 Gew.-% bis ca. 170 Gew.-% an Ammoniak und/oder einer oder mehreren aminofunktionellen organischen Verbindungen zugegeben, jeweils bezogen auf den Gewichtsanteil der alkoholischen Reaktivkomponente.

Als reaktive Silankomponenten werden bevorzugt Alkoxysilane verwendet, welche mit einer oder mehreren nicht funktionalisierten und/oder chemisch funktionalisierten Alkylgruppen, insbesondere olefinische Gruppen wie z.B. Vinyl-, Acryl-, Methacryl-, O-Allyl- und N-Allylgruppen, oder Isocyanat-, Amino-, Epoxid-, Carbonsäureanhydrid- oder Carbonsäureestergruppen modifiziert sind.

Der Gewichtsanteil der Silankomponente, bezogen auf das Gewicht der Partikel liegt beim erfindungsgemäßen Verfahren vorzugsweise im Bereich von ca. 0,01 Gew.-% bis ca. 10 Gew.-%, insbesondere von ca. 0,1 Gew.-% bis ca. 8 Gew.-% und weiter bevorzugt bei ca. 1 Gew. % bis ca. 7 Gew.-%.

Der Gewichtsanteil der alkoholischen Reaktivkomponente, bezogen auf das Gewicht der Partikel liegt vorzugsweise im Bereich von ca. 0,01 Gew.-% bis ca. 20 Gew.-%, insbesondere von ca. 0,03 Gew.-% bis ca. 12 Gew.-% und weiter bevorzugt von ca. 0,08 Gew.-% bis ca. 8 Gew.-%, am meisten bevorzugt von ca. 0,2 Gew.-% bis ca. 5 Gew.-%.

Das erfindungsgemäße Oberflächenmodifizierungsverfahren kann, infolge der möglichen starken Vernetzung der Modifizierungsschicht, auch dazu dienen, das so genannte Releaseverhalten von Korrosionsschutzpigmenten hinsichtlich aktiver korrosionsinhibierender Agenzien als auch deren Hydrophobie zu optimieren und die mit einem stärkeren Release oftmals einhergehenden verstärkte Pigmentlöslichkeit zurückzudrängen.

Da sowohl die Silankomponenten als auch die als alkoholische Reaktivkomponente verwendeten mehrfachen Alkohole kommerziell in großer Vielfalt verfügbar sind, besteht die Möglichkeit, sowohl die Hydrophobie als auch die Vernetzungsdichte der auf der Oberfläche abgelagerten Reaktionsprodukte gezielt für die zu modifizierenden Partikel, beispielsweise das zu beschichtende Pigment, sowie dessen Endanwendung in einem Beschichtungssystem, zu optimieren.

Die Anwendbarkeit des erfinderischen Verfahrens beschränkt sich deshalb nicht auf spezielle Partikel, sondern es eignet sich generell zur Oberflächenmodifizierung von festen, nicht zu feinteiligen Partikeln mit Teilchengrößen im $\mu$m-Bereich.

Als pulverförmige Partikel sind insbesondere granulare Partikel, insbesondere sphärische Partikel (beispielsweise Korrosionsschutzpartikel), oder plättchenförmige Partikel, insbesondere plättchenförmige Pigmente (beispielsweise Perlglanz- und Effektpigmente) und Metallpartikel, bevorzugt plättchenförmige Aluminium-, Kupfer-, Zink-, Kupferlegierungs- und Zinklegierungspigmente zu nennen.

Das Verfahren wird für feste Partikel mit Primärteilchengrößen mit $d_{50}$ Wert im Bereich von ca. 0,1 $\mu$m bis ca. 4.000 $\mu$m, weiter bevorzugt ca. 0,5 $\mu$m bis ca. 500 $\mu$m und insbesondere von ca. 1 $\mu$m bis ca. 100 $\mu$m eingesetzt. Das Verfahren eignet sich ebenso für agglomerations- und aggregationsstabile feinteilige Feststoffe mit einem $d_{50}$-Wert kleiner als 1 $\mu$m, beispielsweise bei ca. 0,1 $\mu$m bis ca. 1 $\mu$m.

Die flüssige Reaktionsmischung kann zusätzlich ca. 0,1 Gew.-% bis ca. 20 Gew.-%, insbesondere ca. 1 Gew.-% bis ca. 10 Gew.-% und weiter bevorzugt ca. 3 Gew.-% bis ca. 6 Gew.-% Additive enthalten, jeweils bezogen auf den Gehalt an alkoholischer Reaktivkomponente.

Als Additive sind beispielsweise Benetzungs-, Dispergier-, und Rheologieadditive, UV-Schutzmittel, Infrarotabsorber, organische und anorganische Farbmittel, Nanopartikel, antibakterielle Zusätze, Korrosionsinhibitoren sowie Stoffe oder Nanopartikel zur Erhöhung der Wärme- und der elektrischen Leitfähigkeit zu nennen. Mit diesen Additiven lässt sich das Anwendungsspektrum der nach dem erfindungsgemäßen Verfahren oberflächenmodifizierten Partikel wesentlich erweitern.

Wird das erfindungsgemäße Modifizierungsverfahren in mehreren Stufen realisiert, lassen sich auch noch komplexere anwendungstechnische und funktionelle Eigenschaften der resultierenden oberflächenmodifizierten Partikelpräparation erreichen.

In einer zweiten Verfahrensstufe werden die abgelagerten Reaktionsprodukte der ersten Verfahrensstufe vorzugsweise mittels radikalischer Polymerisationsprozesse oder mittels Kondensations- oder Additionsreaktionen modifiziert.

Gemäß einer Variante eines mehrstufigen erfindungsgemäßen Verfahrens kann die Silankomponente in der ersten Stufe in Form einer oder mehrerer funktionalisierten Alkoxysilanverbindung(en) eingesetzt werden, an die in einer weiteren Stufe eine chemische Anbindung von monomeren, oligomeren und/oder polymeren Verbindungen erzielt wird.

Die Anbindung der Monomeren, oligomeren oder polymeren Verbindungen geschieht vorzugsweise über funktionelle Gruppen, insbesondere funktionelle Endgruppen, welche ausgewählt sind aus Epoxy-, Carboxyl-, Halogen-, Hydroxyl-, Amino-, Säureanhydrid- und Carbonsäurehalogenidgruppen, sowie olefinisch ungesättigte Gruppen, die vorzugsweise von Seiten der monomeren, oligomeren und/oder polymeren Verbindungen bereitgestellt werden, an die bereits in der ersten Stufe abgelagerten, entsprechend funktionalisierten silanhaltigen Reaktionsprodukte der primären Partikelpräparation.

Die olefinisch ungesättigten Gruppen der Monomeren, oligomeren oder polymeren Verbindungen werden vorzugsweise ausgewählt aus Acryl-, Methacryl-, Vinyl-, und Allylgruppen, wobei O-Allylgruppen und insbesondere N-Allylgruppen besonders bevorzugt sind.

Im Ergebnis erhält man ein flüssiges, pastöses oder pulverförmiges Produkt als primäre Partikelpräparation.

Ausgehend von pulverförmigen Partikeln, insbesondere Aluminiumpigmenten, werden in einer ersten Verfahrensstufe somit vorzugsweise Alkoxysilankomponenten, welche mit olefinischen Gruppen funktionalisiert sind, verwendet, wobei bereits hier eine deutliche Erhöhung der Beständigkeit gegenüber Chemikalien und Wasser erreicht wird. In der zweite Verfahrensstufe können dann olefinisch funktionalisierte, beispielsweise acrylatfunktionalisierte, Verbindungen radikalisch an- bzw. aufpolymerisiert werden, so dass eine Partikelpräparation erhalten wird, welche sich insbesondere zum Einsatz in acrylathaltigen Automobilbasislacken eignet.

Die Empfindlichkeit der auf Aluminum basierenden Pigmente tritt auch in dem im Bereich der Fassadenlackierung etablierten Beständigkeitstests gegenüber Mörtel zutage. Durch eine erfindungsgemäße insbesondere zweistufige Oberflächenmodifizierung lassen sich Aluminiumeffektpigmente mit erhöhter Chemikalien- und Korrosionsbeständigkeit erhalten, welche auch gegenüber den im Fassadenbereich oftmals auftretenden problematischen Verschmutzungen mit Mörtel unempfindlicher reagieren.

Das einstufige erfindungsgemäße Verfahren eignet sich infolge seiner ökonomischen Effizienz beispielsweise hervorragend für eine Oberflächenmodifizierung, insbesondere auch in Form einer Beschichtung, von Pigment- und Füllstoffpartikeln für den Kunststoff-, Pulverlack- oder Industrielackbereich.

Unter Verwendung eines mehrstufigen Verfahrens werden bevorzugt Partikel, insbesondere Pigmentpartikel, an der Oberfläche modifiziert, insbesondere auch beschichtet, die sowohl für den Bereich der Automobilbeschichtungen und Anwendungsbereiche besonders hochwertiger Industrie- und Pulverlacke mit hohen Ansprüchen an chemische und mechanische Beständigkeit als auch für Beschichtungen mit erhobener Witterungsbeständigkeit gedacht sind.

Die Erfindung betrifft des Weiteren Partikelpräparationen, die mit dem erfindungsgemäßen Verfahren herstellbar sind. Die Partikelpräparationen können dabei in flüssiger Suspension, in Pastenform oder auch trocken in Pulverform vorliegen.

Die Erfindung betrifft insbesondere auch Partikelpräparationen, bei denen das Gewichtsverhältnis der in der ersten Verfahrensstufe abgelagerten Reaktionsprodukte zu den in der zweiten Verfahrensstufe chemisch angebundenen Reaktionsprodukte ca. 1:2 oder größer, insbesondere ca. 2:1 oder größer, ist.

Erfindungsgemäße oberflächenmodifizierte Pigmentpartikel eignen sich generell für den Einsatz in Kunststoffen und Beschichtungen jeglicher Art, insbesondere in Pulverlack- und Flüssiglackbeschichtungen, aber auch in Grundierungen sowie weiter bevorzugt in Polyurethan-, Polyacrylat- und Polyesterbeschichtungen.

Wie bereits erläutert, ist das erfindungsgemäße Verfahren besonders zur Oberflächenmodifizierung von Metallpartikeln, insbesondere zur Oberflächenmodifizierung von plättchenförmigen Partikeln und weiterhin bevorzugt zur Oberflächenmodifizierung von Effektpigmenten auf Basis von Aluminium, Kupfer und Kupferlegierungen geeignet. Kommerziell sind diese Pigmente als Interferenzpigmente unter anderem von der BASF SE unter den Handelsnamen Paliocrom® und Variocrom® oder in vielfältiger Weise als Metallicpigmente von der Altana AG oder der Schlenk Metallic Pigments GmbH bekannt.

Vorteilhaft für diese Art von Effektpigmenten sind das bei geringen Pigmentkonzentrationen erhöhte Deckvermögen und die starke Effektausprägung. Nachteilig ist jedoch, dass die Effektpigmente auf Basis von beispielsweise Aluminium unter Feuchtebelastung und insbesondere in saurer und basischer Atmosphäre zur Korrosion neigen.

Beispielsweise tritt diese Empfindlichkeit bei den auf Aluminium basierenden Pigmenten in dem im Bereich der Fassadenlackierung etablierten Beständigkeitstest gegenüber Mörtel zutage. Wird nun eine Behandlung von Aluminiumeffektpigmenten gemäß dem erfindungsgemäßen Verfahren unter Verwendung von mehrfachfunktionellen flüssigen Alkoholen und beispielsweise amino-, alkylfunktionalen Alkoxysilanen, durchgeführt, so lassen sich aluminiumbasierende Effektpigmente mit erhöhter Chemikalien- und Korrosionsbeständigkeit erhalten, die auch im Mörteltest weniger stark angegriffen werden.

Insbesondere bevorzugt ist die Belegung von Aluminiumpigmenten unter Verwendung von Alkoxysilankomponenten, funktionalisiert mit olefinischen Gruppen, so dass nach der ersten Modifizierungsstufe eine deutliche Erhöhung der Beständigkeit der Aluminiumpartikel gegenüber Chemikalien und Wasser erreicht wird. In der zweiten Verfahrensstufe werden dann bevorzugt acrylatmodifizierte Verbindungen radikalisch an die auf der Oberfläche abgelagerten Reaktionsprodukte an- bzw. aufpolymerisiert, so dass sich die erhaltenen Aluminiumpigmente hervorragend zum Einsatz in acrylathaltigen Automobilbasislacken eignen.

Die unter Verwendung des erfindungsgemäßen Verfahrens oberflächenmodifizierten Partikel können auch in anderen Bereichen eingesetzt werden. Beispielsweise kann entsprechend oberflächenmodifizierter Sand im Partikelgrößenbereich bis zu ca. 4.000 μm und mehr, im häuslichen und Baustoffbereich in Wand- oder Bodenbereichen, im Bereich der Pflanzen- und Tierhaltung als Bestandteil eines Bodensubstrats oder auch als Filtermaterialien im Bereich der Wasseraufbereitung Verwendung finden. Im Bereich der Reinigungsmittel oder im Kosmetikbereich ist ein Einsatz nachbehandelter Partikel mit maßgeschneiderten Härteeigenschaften und Partikelgrößen als Peeling-, Scheuer- oder Poliermittel möglich.

Die Erfindung mit ihren unterschiedlichen Ausprägungen wird anhand der Figur und der folgenden Beispiele noch näher erläutert.

Es zeigt

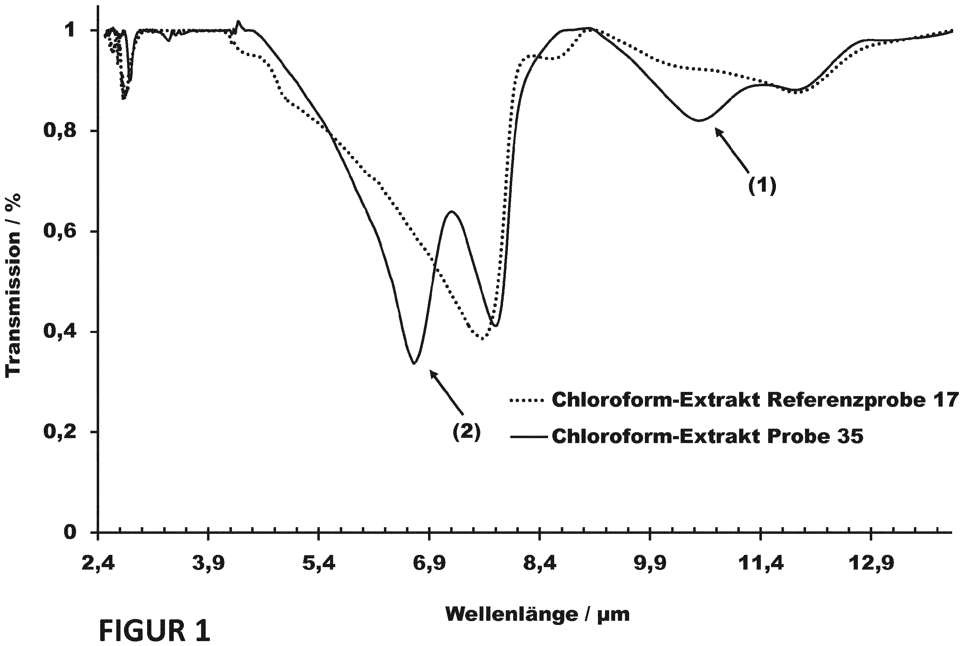

Figur 1  ein Transmissionsspektrum eines Chloroform-Extrakts eines Vergleichspigments und eines erfindungsgemäß beschichteten Pigments.

**BEISPIELE**

**Experimentelles**

Als pulverförmige Partikel wurden in den folgenden Beispielen eingesetzt:

Aluminium-Pigmentpulver Powdal 2900 ($d_{50}$ = 11 $\mu$m; $SiO_2$-beschichtet) der Schlenk Metallic Pigments GmbH,
Aluminium-Pigmentpulver Powdal 340 ($d_{50}$ = 34 $\mu$m; unbeschichtet) der Schlenk Metallic Pigments GmbH,
Kupferbronze-Pigmentpulver Reichbleichgold Multiprint Charge ($d_{50}$ = 11 $\mu$m; unbeschichtet) der Schlenk Metallic Pigments GmbH,
Korrosionsschutzpigmente Zinkmolybdänphoshat Heucophos ZMP ($d_{50}$ = 2,8 $\mu$m) der Heubach GmbH,
Zinkflake Pigmentpulver ($d_{50}$ = 12 $\mu$m; unbeschichtet) der Schlenk Metallic Pigments GmbH und
Aluminiumeffektpigment Variocrom K1411 ($d_{50}$ ca. 20 $\mu$m) der BASF SE,
Perlglanzpigment Iriodin 103 ($d_{50}$ ca. 20 $\mu$m) der Merck KGaA,
Quarzsand mit einer Körnung von 0,1 bis 0,4 mm.

Als Silankomponenten kamen in den folgenden Beispielen zum Einsatz:

3-Methacryloxypropyl-trimethoxysilan (Dynasylan MEMO; Evonik AG), auch kurz MEMO genannt,
3-Glycidyloxypropyltrimethoxysilan (GLYMO, Aldrich), auch kurz GLYMO genannt,
N-(2-Aminoethyl)-3-Aminopropyl-Trimethoxysilan (DAMO; ABCR GmbH & Co. KG), auch kurz DAMO genannt,
n-Hexyltriethoxysilan (ABCR GmbH & Co. KG),
Tetraethoxysilan (ABCR GmbH & Co. KG), auch kurz TEOS genannt,
Triethylamin (Aldrich Co. LLC), auch kurz TEA genannt.

Wo nicht anders vermerkt, beziehen sich die Gew.-%-Angaben in den folgenden Beispielen auf das Gewicht des jeweils verwendeten Pigments.

Folgende Geräte wurden in den folgenden Beispielen verwendet:

Rührer: Dispermat Typ FKF80L/2T der VMA-Getzmann GmbH
Disperser: Schüttelmaschine Disperser DAS H 200-K der LAU GmbH

Charakterisierung der Pigmente

Zur farbmetrischen Charakterisierung und Beurteilung der Säurestabilität wurde(n) das unveränderte Pigmentpulver als Referenz bzw. die in den jeweiligen Beispielen erhaltenen Partikelpräparationen jeweils mit einem Gehalt von 12 Gew.-% f/f (Feststoffgehalt/Feststoffgehalt) in einen Nitrocelluloselack (Feststoffgehalt 11 Gew.-%) unter Verwendung eines SpeedMixers (Typ DAC150FVZ; Hauschild Engineering) bei 600 Umdrehungen pro Minute für 15 min eindispergiert.

Für die unbeschichteten, d.h. nicht mit $SiO_2$ passivierten, Metallpigmente Powdal 340 und Reichbleichgold Multiprint erfolgte die coloristische Abtestung und die Bestimmung der Chemikalienbeständigkeit unter Verwendung eines konventionellen Mischlacks M1471 (Feststoffgehalt 21 Gew.-%) der Karl Wörwag Lack- und Farbenfabrik GmbH & Co KG.

Unter Verwendung einer Spaltrakel wurde anschließend mit einer Nassschichtdicke von 400 $\mu$m auf schwarze Leneta-Prüfbleche (Fa. Krahn Chemie) appliziert.

Die Farbmessungen erfolgten unter Verwendung des MA 68 Multi-Angle Spectrophotometers der Fa. X-Rite. Hierbei wurden die Farbwerte L* bei 15°, 45° und 110° Abweichung vom Glanzwinkel ermittelt, der Flop-Index nach Alman wurde unter Einbeziehung des L*-Werts, der bei 45° Abweichung vom Glanzwinkel ermittelt wurde, gemäß Formel (1) berechnet.

$$\text{Flop Index} = \frac{2.69(L^*_{15°} - L^*_{110°})^{1.11}}{(L^*_{45°})^{0.86}} \qquad (1)$$

Die in den folgenden Tabellen angegebenen Farbwerte L* sind Werte aus drei Messwerten gemittelt.

Der Flop-Index kennzeichnet das Ausmaß der Effektausprägung in der Weise, dass einem höheren Flop-Index eine stärkere Effektausprägung gegenübersteht.

Die Bestimmung der Säurebeständigkeit erfolgte, indem nach 3 h Einwirkdauer einer 10 Gew.-%igen Salzsäurelösung bei Raumtemperatur die visuell sichtbare Effektminderung gemäß A. Albrecht, U. A. Hirth, B. Schreiber, Farbe und Lack 9 (2008), Seiten 52-56, mit einer Einstufung von

1 (keine sichtbare Vergrauung),
2 (kaum sichtbare Vergrauung),
3 (sichtbare Vergrauung),
4 (deutlich sichtbare Vergrauung) und
5 (vollständiger Effektverlust)

beurteilt wurde.

**Beispiel 1:** Oberflächenmodifizierung von Metallpigmenten für Flüssiglacke zur Effektausprägung und Verbesserung der Säurestabilität

8 g Isopropanol (Siedepunkt 82°C) wurden als leichter flüchtige monofunktionelle Alkoholkomponente (80 Gew.-%) in ein thermostatisierbares Edelstahlgefäß gegeben und anschließend mit 0,1 g 1,5-Pentandiol (Siedepunkt 242°C) als alkoholische Reaktivkomponente (1 Gew.-%) versetzt.

Zu der so erhaltenen flüssigen alkoholischen Komponente wurden bei Raumtemperatur 10 g Aluminium-Pigmentpulver Powdal 2900 zugegeben und 15 min lang mit Hilfe des Rührers bei 0,15 m/s vermischt.

Anschließend wurden dieser Mischung bei Raumtemperatur 0,4 g MEMO als Silankomponente (4 Gew.-%) zugegeben. Zunächst wurde die jetzt erhaltene Reaktionsmischung mit dem Aluminium-Pigmentpulver bei Raumtemperatur 30 min lang bei ca. 0,15 m/s mit dem Rührer homogenisiert, anschließend auf 80°C aufgeheizt und bei dieser Temperatur während 60 min weiter gerührt. Zur Entfernung des verbliebenen Restgehalts an Isopropanol wurde die Probe noch im Umluftofen bei 60°C während 1 h getrocknet. Als Ergebnis erhält man eine primäre Partikelpräparation als Probe 1, bei der die Reaktionsprodukte von Silankomponente und alkoholischer Reaktivkomponente auf der Oberfläche der Partikel abgelagert waren.

In einem weiteren Ansatz wurde zu 10 g des Aluminium-Pigmentpulvers Powdal 2900 in einem verschließbaren 250 ml-Polypropylengefäß zunächst 0,1 g (1 Gew.-%) 1,5-Pentandiol zugegeben und durch 20 min Schütteln bei Raumtemperatur im Disperser homogenisiert.

Anschließend wurden 0,4 g MEMO (4 Gew.-%) zugegeben und die Reaktionsmischung mit dem Aluminium-Pigmentpulver wiederum durch jeweils 20 min Schütteln bei Raumtemperatur im Disperser homogenisiert.

Abschließend wurde die Masse in ein thermostatisierbares Edelstahlgefäß gegeben, auf 80°C aufgeheizt und mit dem Rührer für weitere 60 min bei 80°C gerührt. Die dabei erhaltene Partikelpräparation (Probe 2) enthielt das Reaktionsprodukt der Silankomponente mit der alkoholischen Reaktivkomponente auf der Oberfläche der Partikel abgelagert.

Die Probenzusammensetzungen und Ergebnisse der Pigmentcharakterisierung wurden in der folgenden Tabelle 1 zusammengefasst.

Als Referenzprobe 1 diente das unmodifizierte Aluminium-Pigmentpulver Powdal 2900.

Aus den Ergebnissen in Tabelle 1 ergibt sich, dass bei Durchführung des erfindungsgemäßen Verfahrens eine Verbesserung der Säurestabilität von Metallpigmenten in Beschichtungen erreicht werden kann. Ein Vergleich der Ergebnisse der Proben 1 und 2 zeigt, dass die Art der Durchführung des erfindungsgemäßen Verfahrens nur geringe Einflüsse auf die Effektausprägung, bzw. den Flop-Index, jedoch keinen Einfluss auf die Verbesserung der Säurestabilität ausübt.

Tabelle 1 Einfluss einer flüchtigen monofunktionellen Alkoholkomponente auf die Effektausprägung und Säurestabilität von verschiedenen Metallpigmenten in Flüssiglacken

|  | Referenzprobe 1 | Probe 1 | Probe 2 |
|---|---|---|---|
| Pigment | Powdal 2900 | Powdal 2900 | Powdal 2900 |
| Diol / Silan [Gew.-%] | - | 1% Pentandiol 4% MEMO | 1% Pentandiol 4% MEMO |
| monofunktioneller Alkohol [Gew.-%] | - | 80% Isopropanol | - |
| L*-Wert 15° | 137,5 | 134,9 | 138,2 |

(fortgesetzt)

|  | Referenzprobe 1 | Probe 1 | Probe 2 |
|---|---|---|---|
| 45° | 54,1 | 54,7 | 54,3 |
| 110° | 27,6 | 27,3 | 26,8 |
| Flop- Index | 16,0 | 15,5 | 16,2 |
| Säurebeständigkeit | 5 | 4 | 4 |

**Beispiel 2:** Oberflächenmodifizierung von Aluminiumpigmenten für Flüssiglacke zur Effektausprägung und Verbesserung der Säurestabilität in Gegenwart schwerer flüchtiger Kohlenwasserstoffkomponenten wie Toluol

Für die Herstellung der Probe 3 wurden 10 g Aluminium-Pigmentpulver Powdal 2900 vor Durchführung der Oberflächenmodifizierung zunächst in 75 ml Toluol für 1 h gerührt, abfiltriert und danach für 1 h mit 50 ml Aceton gerührt. Anschließend wurde von Aceton abfiltriert und für 1 h bei 60°C getrocknet. Beim zweiten durchgeführten Reinigungsverfahren (Probe 4) wurde analog verfahren, wobei anstelle von Toluol jedoch Butylacetat verwendet wurde.

Für die mit Toluol gereinigte Probe konnte durch eine Thermogravimetrische Analyse ein ungefährer Restgehalt von Toluol von ca. 0,5 Gew.-% ermittelt werden, während für die unter Verwendung von Butylacetat gereinigte Probe nach Trocknung bei 60°C kein Lösemittelanteil festgestellt werden konnte.

Zur Oberflächenmodifizierung wurde zu 10 g Pigmentpulver in einem verschließbaren 250 ml-Polypropylengefäß zunächst 0,1 g (1 Gew.-%) 1,5-Pentandiol zugegeben und durch 20 min Schütteln bei Raumtemperatur im Disperser homogenisiert.

Anschließend wurden 0,4 g MEMO (4 Gew.-%) als Silankomponente zugegeben und wiederum durch jeweils 20 min Schütteln bei Raumtemperatur im Disperser homogenisiert. Anschließend wurde die Probe in ein thermostatisierbares Edelstahlgefäß gegeben, auf 80°C erwärmt und im Rührer für 60 min bei 80°C gerührt.

Das Aluminium-Pigmentpulver Powdal 2900 wurde als Referenzprobe 3 unverändert eingesetzt.

Die Probenzusammensetzung und Ergebnisse der Pigmentcharakterisierung wurden in der folgenden Tabelle 2 zusammengefasst.

Die Ergebnisse in Tabelle 2 zeigen, dass sich eine dem erfindungsgemäßen Verfahren vorausgegangene Reinigung der Pigmente mit Kohlenwasserstoffen wie Toluol eher nachteilig auf die Oberflächenmodifizierung auswirkt, indem auch geringe Spuren an Kohlenwasserstoffen, welche nach dem Spülen der Pigmente mit Aceton noch vorhanden sind, die Säurestabilität herabsetzen.

Tabelle 2 Einfluss einer schwerer flüchtigen Kohlenwasserstoffkomponente wie Toluol auf die Effektausprägung und Säurestabilität von Aluminiumpigmenten in Flüssiglacken

|  | Referenzprobe 3 | Probe 3 | Probe 4 |
|---|---|---|---|
| Diol / Silan [Gew.-%] | - | 1% Pentandiol 4% MEMO | 1% Pentandiol 4% MEMO |
| L*-Wert | | | |
| 15° | 137,5 | 137,8 | 138,8 |
| 45° | 54,1 | 53,4 | 53,3 |
| 110° | 27,6 | 26,8 | 26,8 |
| Flop- Index | 16,0 | 16,4 | 16,6 |
| Säurebeständigkeit | 5 | 5 | 3 |

Werden die Pigmente hingegen zuvor mit Butylacetat gewaschen und danach mit Aceton gespült, so wird eine deutliche Verbesserung der Säurestabilität der Pigmente erreicht. Die vorausgegangene Reinigung der Aluminiumpigmente mit Butylacetat und Aceton scheint sich auch geringfügig positiv auf die Effektausprägung auszuwirken.

**Beispiel 3:** Oberflächenmodifizierung von Aluminiumpigmenten für Flüssiglacke zur Verbesserung der Säurestabilität unter Verwendung einer aminofunktionellen Komponente

In ein thermostatisierbares Edelstahlgefäß wurden 8 g (80 Gew.-%) Isopropanol, anschließend 0,1 g 1,5-Pentandiol (1 Gew.-%) als alkoholische Reaktivkomponente, sowie 40 Gew.-% Ammoniak (bezogen auf das Gewicht der alkoholischen Reaktivkomponente; eingesetzt in Form einer 25 Gew.-%igen wässrigen Lösung; Probe 5) bzw. 160 Gew.-% Diethanolamin (bezogen auf das Gewicht der alkoholischen Reaktivkomponente; Probe 6) bei Raumtemperatur gegeben und mit 10 g Aluminium-Pigmentpulver Powdal 2900 für 15 min in dem Rührer bei 0,15 m/s vermischt. Anschließend wurden bei Raumtemperatur 0,4 g MEMO (4 Gew.-%) als Silankomponente zugegeben. Zunächst wurde bei Raumtemperatur für 30 min bei ca. 0,15 m/s die Probe im Rührer homogenisiert, auf 80°C aufgeheizt und anschließend für 60 min bei 80°C gerührt. Um den Restgehalt an Isopropanol zu entfernen, wurden die Proben jeweils während 1 h im Umluftofen bei 60°C getrocknet.

Als Referenzprobe 4 diente das unveränderte Aluminiumpigment Powdal 2900.

Die Probenzusammensetzung und Ergebnisse der Pigmentcharakterisierung wurden in der folgenden Tabelle 3 zusammengefasst.

Tabelle 3 Einfluss einer aminofunktionellen Komponente auf die Säurestabilität von Aluminiumpigmenten in Flüssiglacken

| | Referenzprobe 4 | Probe 5 | Probe 6 |
|---|---|---|---|
| Diol / Silan [Gew.-%] | - | 1% Pentandiol 4% MEMO | 1% Pentandiol 4% MEMO |
| monofunktioneller Alkohol [Gew.-%] aminofunktionelle Komponente [Gew.-%/ alkoholische Reaktivkomponente] | - | 80% Isopropanol 40% Ammoniak | 80% Isopropanol 160% Diethanolamin |
| Säurebeständigkeit | 5 | 4 | 2 |

Aus den Ergebnissen in Tabelle 3 ergibt sich, dass bei Durchführung des erfindungsgemäßen Verfahrens unter Zugabe geringfügiger Mengen von aminofunktionellen Komponenten, insbesondere von organischen Aminkomponenten, eine Verbesserung der Säurestabilität von Aluminiumpigmenten in Beschichtungen erreicht werden kann.

**Beispiel 4:** Oberflächenmodifizierung von Korrosionsschutzpigmenten zur Verbesserung der Dispergierung und Stabilisierung in Flüssiglacken

Zur Oberflächenmodifizierung wurden in ein thermostatisierbares Edelstahlgefäß 8 g Isopropanol (80 Gew.-%), anschließend 0,1 g 1,5-Pentandiol als alkoholische Reaktivkomponente (1 Gew.-%) bei Raumtemperatur zugegeben und mit 10 g Korrosionsschutzpigment Zinkmolybdänphosphat Heucophos ZMP (Probe 7) oder 10 g Zinkflake Pigmentpulver (Probe 8) für 15 min im Rührer bei 0,15 m/s vermischt. Anschließend wurden bei Raumtemperatur 0,4 g MEMO (4 Gew.-%) als Silankomponente zugegeben. Zunächst wurde nun bei Raumtemperatur für 30 min bei ca. 0,15 m/s die Probe durch Rühren homogenisiert, auf 80°C aufgeheizt und anschließend für 60 min bei 80°C gerührt. Zur Entfernung eines Restgehalts an Isopropanol wurden die Proben noch während 1 h im Umluftofen bei 60°C getrocknet.

Für die Referenzproben 5 und 6 wurden jeweils unmodifizierte Pigmente eingesetzt.

Die Probenzusammensetzung und Ergebnisse der Pigmentcharakterisierung wurden in der folgenden Tabelle 4 zusammengefasst.

Aus den Ergebnissen in Tabelle 4 ergibt sich aus den erhöhten glanznahen Helligkeitswerten (L*-Wert bei 15° vom Glanzwinkel), dass sich bei Durchführung des erfindungsgemäßen Verfahrens bei plättchenförmigen Korrosionsschutzpigmenten (Probe 8) eine Verbesserung der Dispergierung und Stabilität in Beschichtungen erreichen lässt.

Tabelle 4 Einfluss der erfindungsgemäßen Oberflächenmodifizierung auf die Dispergierung und Stabilisierung von Korrosionsschutzpigmenten in Flüssiglacken

| | Referenzprobe 5 | Probe 7 | Referenzprobe 6 | Probe 8 |
|---|---|---|---|---|
| Diol / Silan [Gew.-%] | - | 1% Pentandiol 4% MEMO | - | 1% Pentandiol 4% MEMO |
| monofunktioneller Alkohol [Gew. %] | - | 80% Isopropanol | - | 80% Isopropanol |
| L*-Wert 15° | 39,7 | 37,2 | 108,2 | 110,1 |

(fortgesetzt)

|  | Referenzprobe 5 | Probe 7 | Referenzprobe 6 | Probe 8 |
|---|---|---|---|---|
| 45° | 18,2 | 18,5 | 47,6 | 47,2 |
| 110° | 15,2 | 15,5 | 19,0 | 20,1 |

Für die sphärischen ZMP-Korrosionsschutzpigmente konnte hingegen kein wesentlicher Einfluss auf die Helligkeitswerte festgestellt werden. Dies liegt zum Einen darin begründet, dass es sich bei diesen Pigmenten selbst um graue Pigmente handelt. Für das erfindungsgemäß oberflächenmodifizierte Pigment (Probe 7) zeigte sich jedoch auch in diesem Fall eine visuell sichtbar bessere Dispergierung und Stabilisierung der Pigmente mit geringer ausgeprägter Bildung von Strukturen und Agglomeraten in der Lackschicht und einer ebenfalls geringeren Neigung zur Stippenbildung.

**Beispiel 5:** Oberflächenmodifizierung von Aluminiumpigmenten für Flüssiglacke; Einfluss der Diol-Kettenlänge auf die Effektausprägung und die Verbesserung der Säurestabilität

Zur Oberflächenmodifizierung wurden in ein thermostatisierbares Edelstahlgefäß 8 g Isopropanol (80 Gew.-%), anschließend 0,1 g (1 Gew.-%) eines entsprechenden Diols (Probe 9: 1,3-Propandiol, Siedepunkt 213°C; Probe 10: 1,4-Butandiol, Siedepunkt 230°C; Probe 11: 1,5-Pentandiol, Siedepunkt 242°C; Probe 12: 1,6-Hexandiol, Siedepunkt 216°C) als alkoholische Reaktivkomponente bei Raumtemperatur zugegeben und mit 10 g Aluminium-Pigmentpulver Powdal 2900 für 15 min im Rührer bei 0,15 m/s vermischt. Anschließend wurden bei Raumtemperatur 0,4 g MEMO (4 Gew.-%) als Silankomponente zugegeben. Zunächst wurde nun bei Raumtemperatur für 30 min bei ca. 0,15 m/s die Probe durch Rühren homogenisiert, dann auf 80°C aufgeheizt und anschließend für 60 min bei 80°C gerührt. Um den Restgehalt an Isopropanol zu entfernen, wurden die Proben noch während 1 h im Umluftofen bei 60°C getrocknet.

Als Referenzprobe 7 diente das unmodifizierte Pigment Powdal 2900.

Die Probenzusammensetzung und Ergebnisse der Pigmentcharakterisierung wurden in der folgenden Tabelle 5 zusammengefasst.

Tabelle 5 Einfluss der Diol-Kettenlänge auf die Effektausprägung und Säurestabilität von Aluminiumpigmenten in Flüssiglacken

|  | Referenzprobe 7 | Probe 9 | Probe 10 | Probe 11 | Probe 12 |
|---|---|---|---|---|---|
| Diol / Silan [Gew.-%] | - | 1% 1,3-Propandiol 4% MEMO | 1% 1,4-Butandiol 4% MEMO | 1% 1,5-Pentandiol 4% MEMO | 1% 1,6-Hexandiol 4% MEMO |
| monofunktioneller Alkohol [Gew.-%] | - | 80% Isopropanol | 80% Isopropanol | 80% Isopropanol | 80% Isopropanol |
| L*-Wert 15° | 137,5 | 122,4 | 137,9 | 134,9 | 135,2 |
| 45° | 54,1 | 59,2 | 54,0 | 54,7 | 54,4 |
| 110° | 27,6 | 29,3 | 26,9 | 27,3 | 27,1 |
| Flop-Index | 16,0 | 12,3 | 16,2 | 15,5 | 15,7 |
| Säurebeständigkeit | 5 | 3 | 4 | 4 | 4 |

Aus den Ergebnissen in Tabelle 5 ergibt sich, dass die Variation der Diol-Kettenlänge einen starken Einfluss sowohl auf die Säurestabilität als auch auf den Flop-Index ausübt. Während sich das eher kurzkettige 1,3-Propandiol äußerst positiv auf die Säurebeständigkeit der Aluminiumpigmente auswirkte (Probe 9), wurden für die Oberflächenmodifizierung unter Verwendung von 1,4-Butanol (Probe 10) sehr hohe Flop-Index-Werte in den Beschichtungen erreicht. Dieses Beispiel zeigt auch, dass es möglich ist, durch Mischung und Variation der Diol-Komponente Eigenschaften wie die Chemikalienbeständigkeit und die Farbeigenschaften wie die Effektausprägung für Pigmente in Beschichtungen zu optimieren.

**Beispiel 6:** Oberflächenmodifizierung von Aluminiumpigmenten für Flüssiglacke; Effekt der Silankomponente auf die Effektausprägung und die Verbesserung der Säurestabilität

Zur Oberflächenmodifizierung wurden in ein thermostatisierbares Edelstahlgefäß 8 g Isopropanol (80 Gew.-

%), anschließend das entsprechende Diol (Probe 13: 1,3-Propandiol; Probe 14: 1,4-Butandiol; Probe 15: 1,6-Hexandiol; Proben 16, 17 und 18: 1,5-Pentandiol) als alkoholische Reaktivkomponente in den in den Tabellen 6 und 7 angegebenen Mengen bei Raumtemperatur zugegeben und mit 10 g Aluminium-Pigmentpulver Powdal 2900 für 15 min im Rührer bei 0,15 m/s vermischt. Anschließend wurden bei Raumtemperatur 0,4 g MEMO, GLYMO und/oder DAMO als Silankomponente zugegeben. Zunächst wurde nun bei Raumtemperatur für 30 min bei ca. 0,15 m/s die Probe durch Rühren homogenisiert, auf 80°C erwärmt und anschließend für 60 min bei 80°C gerührt. Um den Restgehalt an Isopropanol zu entfernen, wurden die Proben jeweils noch während 1 h im Umluftofen bei 60°C getrocknet.

Als Referenzprobe 8 diente das unmodifizierte Aluminiumpigment Powdal 2900.

Die Probenzusammensetzung und Ergebnisse der Pigmentcharakterisierung wurden in der folgenden Tabelle 6 und Tabelle 7 zusammengefasst.

Tabelle 6 Einfluss der Silankomponente und Diol-Komponente auf die Effektausprägung und Säurestabilität von Aluminiumpigmenten in Flüssiglacken

| | Referenzprobe 8 | Probe 13 | Probe 14 | Probe 15 |
|---|---|---|---|---|
| Diol / Silan [Gew.-%] | - | 1% Propandiol 3% MEMO 1% DAMO | 1% Butandiol 3% MEMO 1% DAMO | 1% Hexandiol 3% MEMO 1% DAMO |
| monofunktioneller Alkohol [Gew.-%] | - | 80% Isopropanol | 80% Isopropanol | 80% Isopropanol |
| L*-Wert 15° 45° 110° | 137,5 54,1 27,6 | 123,8 58,7 28,7 | 124,6 59,7 28,9 | 131,5 53,7 26,9 |
| Flop-Index | 16,0 | 12,7 | 12,6 | 15,3 |
| Säurebeständigkeit | 5 | 3 | 3 | 4 |

Tabelle 7 Einfluss der Silankomponente auf die Effektausprägung und Säurestabilität von Aluminiumpigmenten in Flüssiglacken

| | Referenzprobe 8 | Probe 16 | Probe 17 | Probe 18 |
|---|---|---|---|---|
| Diol / Silan [Gew.-%] | - | 1% Pentandiol 4% MEMO | 1% Pentandiol 4% DAMO | 1% Pentandiol 4% GLYMO |
| L*-Wert 15° 45° 110° | 137,5 54,1 27,6 | 138,8 53,3 26,8 | 116,2 58,1 28,5 | 117,8 61,0 29,1 |
| Flop-Index | 16,0 | 16,6 | 11,7 | 11,4 |
| Säurebeständigkeit | 5 | 4 | 4 | 2 |

Aus den Ergebnissen der Tabellen 6 und 7 ergibt sich, dass sowohl die Variation der Diol-Kettenlänge als auch die Variation der Silankomponente einen starken Einfluss auf die Säurestabilität und den Flop-Index ausübt.

Besonders hohe Säurestabilität wurde bei der Oberflächenmodifikation auf der Basis von Pentandiol und GLYMO erreicht, während bei der Oberflächenmodifizierung auf der Basis von Pentandiol und MEMO eine höhere Effektausprägung erreicht wurde. Dieses Beispiel zeigt, dass es möglich ist, durch Mischung und Variation der Diol- und der Silankomponenten Eigenschaften wie die Chemikalienbeständigkeit und die Farbeigenschaften wie die Effektausprägung für Pigmente in Beschichtungen zu optimieren.

**Beispiel 7:** Oberflächenmodifikation von Aluminiumpigmenten für Flüssiglacke; Einfluss der Diol-/Silanverhältnisse auf die Effektausprägung und Säurestabilität

Zur Oberflächenmodifikation wurde zu 10 g Aluminium-Pigmentpulver Powdal 2900 in einem verschließbaren 250 ml-Polypropylengefäß zunächst 1,5-Pentandiol (Proben 19, 20, 21: 1 Gew.-%; Probe 22: 2 Gew.-%; Probe 23: 0,5 Gew.-%) zugegeben und durch 20 min Schütteln bei Raumtemperatur im Disperser homogenisiert. Anschließend wurde MEMO als Silankomponente in den in den Tabellen 8 und 9 spezifizierten Mengen zugegeben und die Proben wiederum durch jeweils 20 min Schütteln bei Raumtemperatur im Disperser homogenisiert. Anschließend wurden die Proben in ein thermostatisierbares Edelstahlgefäß gegeben, auf 80°C erwärmt und dann mit dem Rührer für 60 min bei 80°C gerührt.

Als Referenzprobe 9 wurde unmodifiziertes Aluminiumpigment Powdal 2900 verwendet.

Die Probenzusammensetzung und Ergebnisse der Pigmentcharakterisierung wurden in der folgenden Tabelle 8 und 9 zusammengefasst.

Tabelle 8 Einfluss der Diol-/Silanverhältnisse auf die Effektausprägung und Säurestabilität von Aluminiumpigmenten in Flüssiglacken

| | Referenzprobe 9 | Probe 19 | Probe 20 | Probe 21 |
|---|---|---|---|---|
| Diol / Silan [Gew.-%] | - | 1% Pentandiol 3% MEMO | 1% Pentandiol 4% MEMO | 1% Pentandiol 5% MEMO |
| L*-Wert 15° 45° 110° | 137,5 54,1 27,6 | 133,3 51,8 26,4 | 138,8 53,3 26,8 | 131,9 51,8 26,4 |
| Flop- Index | 16,0 | 16,1 | 16,6 | 15,9 |
| Säurebeständigkeit | 5 | 4 | 4 | 4 |

Tabelle 9 Einfluss der Diol-/Silanverhältnisse auf die Effektausprägung und Säurestabilität von Aluminiumpigmenten in Flüssiglacken

| | Referenzprobe 9 | Probe 22 | Probe 23 |
|---|---|---|---|
| Diol / Silan [Gew.-%] | - | 2% Pentandiol 3% MEMO | 0,5% Pentandiol 4,5% MEMO |
| L*-Wert 15° 45° 110° | 137,5 54,1 27,6 | 134,4 52,8 26,6 | 126,1 59,0 28,9 |
| Flop-Index | 16,0 | 16,0 | 13,0 |
| Säurebeständigkeit | 5 | 4 | 3 |

Aus den Ergebnissen der Tabellen 8 und 9 ergibt sich, dass es auch möglich ist, durch alleinige Variation der Mengen der verwendeten Silankomponente einen starken Einfluss auf die Säurestabilität und den Flop-Index auszuüben. Eine besonders hohe Säurestabilität wurde bei der Oberflächenmodifikation auf der Basis von 0,5 Gew.-% Pentandiol und 4,5 Gew.-% MEMO erreicht, während bei der Oberflächenmodifizierung auf der Basis von 1 Gew.-% Pentandiol und 4 Gew.-% MEMO eine höhere Effektausprägung erreicht wurde.

**Beispiel 8:** Oberflächenmodifizierung von Aluminiumpigmenten für Flüssiglacke; Einfluss einer zweistufigen Durchführung auf die Effektausprägung und Säurestabilität

Bei den Versuchen mit einer zusätzlichen Oberflächenmodifizierung in einer zweiten Verfahrensstufe mittels radikalischer Vernetzung wurde zunächst in der ersten Stufe der Oberflächenmodifizierung zu 10 g Aluminium-Pigmentpulver Powdal 2900 in einem verschließbaren 250 ml-Polypropylengefäß 0,1 g 1,5-Pentandiol (1 Gew.-%) zugegeben und durch 20 min Schütteln bei Raumtemperatur im Disperser homogenisiert. Anschließend wurden 0,4 g MEMO (4 Gew.-%) als Silankomponente zugegeben und die Proben wiederum durch jeweils 20 min Schütteln bei Raumtemperatur im Disperser homogenisiert. Anschließend wurden die Proben in ein thermostatisierbares Edelstahlgefäß gegeben und im Rührer für 60 min bei 80°C gerührt.

Die radikalische Nachvernetzung in der zweiten Verfahrensstufe unter zusätzlicher Verwendung von polymerisierbaren Monomeren wurde durchgeführt, indem in ein thermostatisierbares Edelstahlgefäß für die Probe 24 zunächst 4 g Isopropanol (40 Gew.-%), welches 0,05 g gelöstes Decandioldimethacrylat (0,5 Gew.-%) enthielt, sowie 4 g Isopropanol, in dem bereits 0,08 g Dibenzylperoxid (0,8 Gew.-%) gelöst waren, zu 10 g des bereits in der ersten Stufe modifizierten Pigments zugegeben wurden. Für Probe 25 wurden ausschließlich 0,08 g Dibenzylperoxid (0,8 Gew.-%) in 8 g Isopropanol (80 Gew.-%) gelöst zu 10 g des bereits in der ersten Stufe modifizierten Pigments zugegeben.

Bei Raumtemperatur wurde für 30 min bei ca. 0,15 m/s die jeweilige Probe im Rührer homogenisiert, auf 80°C erwärmt und anschließend für 60 min bei 80°C gerührt. Um den Restgehalt an Isopropanol zu entfernen, wurden die Proben 24 und 25 noch während 1 h im Umluftofen bei 60°C getrocknet.

Bei einem weiteren Versuch mit nachträglicher chemischer Vernetzung (Probe 26) wurde in der ersten Stufe der Modifizierung zu 10 g Aluminium-Pigmentpulver Powdal 2900 in einem verschließbaren 250 ml-Polypropylengefäß zunächst 0,1 g 1,5-Pentandiol (1 Gew.-%) zugegeben und durch 20 min Schütteln bei Raumtemperatur im Disperser homogenisiert. Anschließend wurden 0,4 g DAMO (4 Gew.-%) als Silankomponente zugegeben und die Probe wiederum durch jeweils 20 min Schütteln bei Raumtemperatur im Disperser homogenisiert. Anschließend wurde die Probe in ein thermostatisierbares Edelstahlgefäß gegeben, auf 80°C erwärmt und dann im Rührer für 60 min bei 80°C gerührt.

Anschließend wurden 0,05 g Polyethylenglycol-diglycidylether (Sigma Aldrich) (0,5 Gew.-%) in 8 g Isopropanol (80 Gew.-%) als reaktive Polymerkomponente zu 10 g eines in der ersten Verfahrensstufe modifizierten Pigments zugegeben und die Probe wiederum durch 20 min Schütteln bei Raumtemperatur im Disperser homogenisiert. Anschließend wurde die Probe in ein thermostatisierbares Edelstahlgefäß gegeben, auf 80°C erwärmt und dann im Rührer für 60 min bei 80°C gerührt. Um den Restgehalt an Isopropanol zu entfernen, wurde die Probe 26 noch während 1 h im Umluftofen bei 60°C getrocknet.

Bei einem weiteren Versuch mit doppelter Anwendung des Verfahrens (Probe 27) wurde in der ersten Stufe und der anschließenden zweiten Stufe der Modifizierung zu 10 g Aluminium-Pigmentpulver Powdal 2900 in einem verschließbaren 250 ml-Polypropylengefäß zunächst 0,1 g 1,5-Pentandiol zugegeben und durch 20 min Schütteln bei Raumtemperatur im Disperser homogenisiert. Anschließend wurden 0,3 g MEMO (3 Gew.-%) als Silankomponente zugegeben und die Probe wiederum durch 20 min Schütteln bei Raumtemperatur im Disperser homogenisiert.

Anschließend wurde die Probe in ein thermostatisierbares Edelstahlgefäß gegeben, auf 80°C erwärmt und dann im Rührer für 60 min bei 80°C gerührt.

Als Referenzprobe 10 diente jeweils unmodifiziertes Aluminiumpigment Powdal 2900.

Die Probenzusammensetzung und Ergebnisse der Pigmentcharakterisierung wurden in den folgenden Tabellen 10 und 11 zusammengefasst.

Tabelle 10 Zweistufige Durchführung; Effektausprägung und Säurestabilität von Aluminiumpigmenten in Flüssiglacken, wenn als zweite Stufe eine radikalische Umsetzung durchgeführt wird

| | Referenzprobe 10 | Probe 24 | Probe 25 |
|---|---|---|---|
| Komponenten Stufe 1 [Gew.-%] | - | 1% Pentandiol 4% MEMO | 1% Pentandiol 4% MEMO |
| Komponenten Stufe 2 [Gew.-%] | - | 0,8% Dibenzylperoxid 0,5% Decandioldimethacrylat | 0,8% Dibenzylperoxid |
| L*-Wert 15° 45° 110° | 137,5 54,1 27,6 | 122,9 61,2 28,9 | 129,4 56,7 28,1 |
| Flop- Index | 16,0 | 12,1 | 14,0 |
| Säurebeständigkeit | 5 | 3 | 4 |

Aus den Ergebnissen der Tabellen 10 und 11 ergibt sich, dass es möglich ist, durch eine zweistufige Umsetzung des Verfahrens einen starken Einfluss auf die Säurestabilität und den Flop-Index auszuüben. Eine besonders hohe Säurestabilität wurde für die Probe 26 erzielt, für welche in der zweiten Stufe eine chemische Nachvernetzung durchgeführt wurde, während für die Oberflächenmodifizierung, für welche dasselbe Verfahren wiederholt wurde (Probe 27), eine vorteilhaftere Effektausprägung erreicht wurde.

Tabelle 11 Zweistufige Durchführung; Effektausprägung und Säurestabilität von Aluminiumpigmenten in Flüssiglacken, wenn die Belegung als zweite Stufe wiederholt oder als zweite Stufe eine chemische Nachvernetzung durchgeführt wird

| | Referenzprobe 10 | Probe 26 | Probe 27 |
|---|---|---|---|
| Komponenten Stufe 1 [Gew.-% / Pigment] | - | 1% Pentandiol 4% DAMO | 1% Pentandiol 3% MEMO |
| Komponenten Stufe 2 [Gew.-% / Pigment] | - | 0,5% Polyethylenglycoldiglycidylether | 1% Pentandiol 3% MEMO |
| L*-Wert 15° 45° 110° | 137,5 54,1 27,6 | 116,2 58,2 28,7 | 133,4 54,3 27,3 |
| Flop-Index | 16,0 | 11,7 | 15,4 |
| Säurebeständigkeit | 5 | 2 | 3 |

**Beispiel 9:** Oberflächenmodifizierung von Effektpigmenten auf Basis von Aluminium; Einfluss auf die Effektausprägung und Säurestabilität in Flüssiglacken

Zur Oberflächenmodifizierung wurde zu 10 g Variochrom-Pigment in einem verschließbaren 250 ml-Polypropylengefäß zunächst 1 Gew.-% oder 0,1 g des Diols (Probe 29: 1,3-Propandiol; Probe 28: 1,5-Pentandiol) zugegeben und durch 20 min Schütteln bei Raumtemperatur im Disperser homogenisiert. Anschließend wurden 0,4 g MEMO (4 Gew.-%) als Silankomponente zugegeben und die Probe wiederum durch jeweils 20 min Schütteln bei Raumtemperatur im Disperser homogenisiert. Anschließend wurde die Probe in ein thermostatisierbares Edelstahlgefäß gegeben, auf 80°C erwärmt und dann im Rührer für 60 min bei 80°C gerührt.
Als Referenzprobe 11 diente unmodifiziertes Variocrom-Pigment.
Die Probenzusammensetzung und Ergebnisse wurden in der folgenden Tabelle 12 zusammengefasst.
Aus den Ergebnissen der Tabelle 12 ergibt sich, dass bei Durchführung des erfindungsgemäßen Verfahrens eine Verbesserung der Säurestabilität von Farbeffektpigmenten auf Basis von Aluminium in Beschichtungen erreicht werden kann, ohne einen Einfluss auf die Effektausprägung auszuüben.

Tabelle 12 Einfluss auf die Effektausprägung und Säurestabilität in Flüssiglacken bei Effektpigmenten auf Basis von Aluminium

| | Referenzprobe 11 | Probe 28 | Probe 29 |
|---|---|---|---|
| Diol / Silan [Gew.-%] | - | 1% Pentandiol 4 % MEMO | 1% Propandiol 4% MEMO |
| L*-Wert 15° 45° 110° | 125,1 42,4 16,5 | 125,0 41,5 16,1 | 126,0 42,2 16,4 |
| Flop-Index | 19,5 | 19,9 | 19,8 |
| Säurebeständigkeit | 5 | 3 | 4 |

**Beispiel 10:** Oberflächenmodifikation von Perlglanzpigmenten für Flüssiglacke; Einfluss auf die Effektausprägung

Zur Durchführung der Belegung wurde zu 10 g Perlglanzpigment Iriodin 103 in einem verschließbaren 250 ml-Polypropylengefäß zunächst 1 Gew.-% oder 0,1 g des betreffenden Diols (Probe 30: 1,5-Pentandiol; Probe 31: 1,3-Propandiol) zugegeben und durch 20 min Schütteln bei Raumtemperatur im Disperser homogenisiert. Anschließend wurden 0,4 g MEMO (4 Gew.-%) als Silankomponente zugegeben und die Proben wiederum durch jeweils 20 min Schütteln bei Raumtemperatur im Disperser homogenisiert. Anschließend wurde die Probe in ein thermostatisierbares Edelstahlgefäß gegeben, auf 80°C erwärmt und dann im Rührer für 60 min bei 80°C gerührt.
Als Referenzprobe 12 diente unmodifiziertes Perlglanzpigment Iriodin 103.

Die Probenzusammensetzung und Ergebnisse wurden in der folgenden Tabelle 13 zusammengefasst.

Tabelle 13 Einfluss auf die Effektausprägung von Perlglanzpigmenten in Flüssiglacken

| | Referenzprobe 12 | Probe 30 | Probe 31 |
|---|---|---|---|
| Diol / Silan [Gew.-%] | - | 1% Pentandiol 4 % MEMO | 1% Propandiol 4% MEMO |
| L*-Wert 15° 45° 110° | 113,3 30,4 15,9 | 113,7 32,1 16,4 | 116,8 31,1 15,5 |
| Flop- Index | 23,0 | 22,0 | 23,5 |

Aus den Ergebnissen der Tabelle 13 ergibt sich, dass auch bei Durchführung des erfindungsgemäßen Verfahrens unter Verwendung von Perlglanzpigmenten ein positiver Einfluss auf die Effektausprägung ausgeübt werden kann.

**Beispiel 11:** Oberflächenmodifizierung von Aluminiumpigmenten; Einfluss eines zweistufigen Verfahrens mit radikalischer Nachvernetzung in der zweiten Verfahrensstufe auf die Stabilität von Aluminiumpigmenten in Pulverlacken gegenüber Mörtel

Die Oberflächenmodifizierung wurde analog Beispiel 8 in zwei Stufen durchgeführt (Proben 24 und 25).
Als Referenzprobe 13 diente unmodifiziertes Pigment Powdal 2900.

Charakterisierung der Pigmente

Zur Charakterisierung der Mörtelbeständigkeiten wurde das Pigment bei einem Gehalt von 2% Pigment f/f (Feststoff/Feststoff) in einen Polyester-Pulverlack (Wöralit-Pulverlack W866) als DryBlend eingearbeitet und der resultierende Pulverlack mit einer Schichtdicke von ca. 80 μm auf Stahlbleche appliziert.
Die Beständigkeiten gegenüber Mörtel wurden gemäß GSB Richtlinie, 11.11 Anlage 11: Mörteltest, sowie gemäß einem Auszug aus der AAMA 603-7-1976 getestet. Für die Mörtelherstellung wurde ein Baukalk gemäß ASTM C 207-91 verwendet.
Die Beurteilung erfolgte durch einen visuellen Vergleich gemäß A. Albrecht, U. A. Hirth, B. Schreiber, Farbe und Lack 9 (2008), Seiten 52-56, mit einer Einstufung von

1 (keine sichtbare Effektminderung),
2 (kaum sichtbare Effektminderung),
3 (sichtbare Effektminderung),
4 (deutlich sichtbare Effektminderung) und
5 (vollständiger Effektverlust).

Die Probenzusammensetzung und Ergebnisse wurden in der folgenden Tabelle 14 zusammengefasst.
Aus den Ergebnissen in Tabelle 14 ergibt sich, dass es möglich ist, durch eine zweistufige Umsetzung des Verfahrens einen starken Einfluss auf die Mörtelstabilität in Pulverlacken auszuüben. Eine deutlich erhöhte Mörtelbeständigkeit wurde für die Probe 24 erzielt, für welche in der zweiten Stufe eine radikalische Nachvernetzung unter Zugabe eines polymerisierbaren Monomeren durchgeführt wurde.

Tabelle 14 Einfluss eines zweistufigen Verfahrens auf die Mörtelstabilität von Aluminiumpigmenten in Pulverlacken, wenn als zweite Stufe eine radikalische Nachvernetzung durchgeführt wird

| | Referenzprobe 13 | Probe 24 | Probe 25 |
|---|---|---|---|
| Diol / Silan [Gew.-%] | - | 1% Pentandiol 4% MEMO | 1% Pentandiol 4% MEMO |
| Komponenten der radikalischen Nachvernetzung | - | 0,8 % Dibenzoylperoxid 0,5% Decandioldimethacrylat | 0,8 % Dibenzoylperoxid |

(fortgesetzt)

| | Referenzprobe 13 | Probe 24 | Probe 25 |
|---|---|---|---|
| Stabilität im Mörteltest | 5 | 3 | 4 |

**Beispiel 12:** Oberflächenmodifizierung von Sand

Zur Oberflächenmodifizierung für Probe 32 wurde zu 10 g Quarzsand in einem verschließbaren 250 ml-Polypropylengefäß zunächst 0,01 g 1,5-Pentandiol (0,1 Gew.-% bezogen auf Sand) zugegeben und durch 20 min Schütteln bei Raumtemperatur im Disperser möglichst homogenisiert. Anschließend wurde 0,04 g MEMO (0,4 Gew.-% bezogen auf Sand) als Silankomponente zugegeben und die Probe wiederum durch jeweils 20 min Schütteln bei Raumtemperatur im Disperser möglichst homogenisiert. Anschließend wurde die Probe in ein thermostatisierbares Edelstahlgefäß gegeben, auf 80°C erwärmt und dann im Rührer für 60 min bei 80°C gerührt.

Charakterisierung der Sandproben

Zur Beurteilung wurde(n) 1 ml der jeweiligen Sandprobe in 10 ml-Sedimentationsröhrchen (Durchmesser ca. 1 cm) gefüllt und 9 ml Triethylenglycol hinzugefügt. Nach dem Aufschütteln der Sandproben wurde nach 30 sec. das Volumen des Sediments bestimmt. Für jede Sandprobe wurde(n) eine Dreifachbestimmung durchgeführt und die erhaltenen Werte gemittelt.
Als Referenzprobe 16 diente unmodifizierter Sand.
Die Probenzusammensetzung und Ergebnisse sind in Tabelle 15 zusammengefasst.

Tabelle 15 Einfluss auf die Benetzungseigenschaften von Quarzsand

| Bezeichnung | Referenzprobe 14 | Probe 32 |
|---|---|---|
| Diol / Silan [Gew.-%] | - | 0,1% Pentandiol 0,4 % MEMO |
| Sedimentationsvolumen nach 30 sec. [ml] | 0,96 | 0,67 |

Aus den Ergebnissen der Tabelle 15 ergibt sich, dass auch bei Durchführung des erfindungsgemäßen Verfahrens unter Verwendung von Sand die Oberflächeneigenschaften gesteuert werden können und somit ein positiver Einfluss auf die Benetzung von Sand in organischen Flüssigkeiten und Lackformulierungen, wie z.B. in Fußbodenbeschichtungen, ausgeübt werden kann.
Wird oberflächenmodifizierter Sand als Filtermaterial eingesetzt, so kann die Absorption und damit die Filterwirkung gegenüber organischen Schmutzpartikeln verstärkt werden.

**Beispiel 13:** Oberflächenmodifizierung von nicht mit Siliziumdioxid stabilisierten Metallpigmenten für Flüssiglacke zur Verbesserung der Säurestabilität

In diesem Beispiel erfolgt die erfindungsgemäße Oberflächenmodifizierung an nicht mit Siliziumdioxid stabilisierten bzw. passivierten Metallpigmenten, nämlich zum Einen an dem Aluminiumpigment Powdal 340 und zum Anderen an dem Kupferbronzepigment Reichbleichgold Multiprint.
Zur Durchführung der Oberflächenmodifizierung wurde(n) in einem thermostatisierbaren Edelstahlgefäß 8 g Isopropanol (80 Gew.-%) als leicht flüchtige monofunktionelle Alkoholkomponente gegeben, anschließend 0,1 g an 1,5-Pentandiol als alkoholische Reaktivkomponente (0,5 Gew.-%) bei Raumtemperatur zugegeben und mit 10 g Aluminium-Pigmentpulver Powdal 340 (Probe 33) bzw. 10 g Kupferbronze-Pigmentpulver Reichbleichgold Multiprint (Probe 34) für 15 min in einem Rührer bei 0,15 m/s vermischt.
Anschließend wurden bei Raumtemperatur 0,3 g n-Hexyltriethoxysilan (3 Gew.-%) als Silankomponente zugegeben. Zunächst wurden bei Raumtemperatur während 30 min bei ca. 0,15 m/s die Proben durch Rühren homogenisiert, dann auf 80°C aufgeheizt und anschließend während 60 min bei 80°C gerührt. Zur Entfernung eines Restgehalts an Isopropanol wurden die Proben noch während 1 h im Umluftofen bei 60°C getrocknet.
Als Referenzproben 15 und 16 dienten die jeweils unmodifizierten Metallpigmente Powdal 340 bzw. Reichbleichgold Multiprint.
Aus den Ergebnissen der Tabelle 16 ergibt sich, dass bei Anwendung des erfindungsgemäßen Verfahrens auch eine Verbesserung der Säurestabilität von nicht mit Siliziumdioxid passivierten bzw. stabilisierten Metallpigmenten erzielbar ist, ohne dass die Effektausprägung bzw. der Flop-Index darunter wesentlich beeinflusst wird.

Darüber hinaus zeigen die erfindungsgemäß modifizierten Pigmente eine visuell sichtbare bessere Dispergierung und Stabilisierung mit gering ausgeprägter Bildung von Strukturen und Agglomeraten in der Lackschicht. Auch die Neigung zur Stippenbildung ist bei den erfindungsgemäß modifizierten Pigmenten geringer.

Tabelle 16 Einfluss der Oberflächenmodifizierung auf die Effektausprägung und Säurestabilität von nicht passivierten Metallpigmenten in Flüssiglacken

| | Referenzprobe 15 | Probe 33 | Referenzprobe 16 | Probe 34 |
|---|---|---|---|---|
| Pigment | Powdal 340 | Powdal 340 | Multiprint | Multiprint |
| Diol/Silan [Gew.-%] | - | 0,5 % Pentandiol 3 % n-Hexyltriethoxysilan | - | 0,5 % Pentandiol 3 % n-Hexyltriethoxysilan |
| monofunktioneller Alkohol [Gew.-%] | - | 80 % Isopropanol | - | 80 % Isopropanol |
| L*-Wert 15° 45° 110° | 147,8 52,6 25,9 | 146,2 54,7 26,2 | 115,7 54,9 19,1 | 115,8 54,3 19,0 |
| Flop-Index | 18,4 | 17,5 | 13,7 | 13,9 |
| Säurebeständigkeit | 3 | 2 | 5 | 4 |

**Beispiel 14:** Stofflich analytischer Vergleich einer Pigment-Oberflächenmodifizierung, erhalten mit einem herkömmlichen Verfahren und unter Anwendung des erfindungsgemäßen Verfahrens

Eine Referenzprobe 17 wurde mittels einer herkömmlichen Silanisierung des unbeschichteten Aluminiumpigments Powdal 340 und eine Probe 35 mittels einer erfindungsgemäßen Oberflächenmodifizierung (Silanisierung in Pentandiol als Reaktivlösemittel) hergestellt.

Zur stofflichen Charakterisierung der bei Anwendung der unterschiedlichen Verfahren ausgebildeten Oberflächenmodifizierungen wurden die Proben mittels Chloroform extrahiert.

Herstellung Referenzprobe 17: Herkömmliche Silanisierung ohne Diol-komponente:

15 g unbeschichtetes Aluminiumpigment Powdal 340 wurden in 60 g Ethanol für 30 min bei 0,15 m/s dispergiert und auf 80°C aufgeheizt. Zu dieser Dispersion wurden 2,25 g Tetraethoxysilan (TEOS) (entsprechend 15 Gew.-% bezogen auf das eingesetzte Pigment) und Triethylamin (TEA) in Form einer 10%-igen Dispersion (0,15 g TEA in 1,35 g Wasser, entsprechend 1 Gew.% bezogen auf das eingesetzte Pigment) zugegeben. Diese Reaktionsmischung wurde während 60 min bei 80°C unter Verwendung eines Rückflusskühlers, zur Vermeidung des Aufkonzentrierens der Reaktionsmischung, erhitzt. Das eingesetzte TEOS wird dabei zu Siliziumdioxid umgesetzt, welches eine Siliziumdioxid-Schicht an der Pigmentoberfläche ausbildet.

Danach wurden der Reaktionsmischung 0,15 g MEMO (entsprechend 1 Gew.-% bezogen auf das eingesetzte Pigment) zugegeben, für 30 min bei 80°C gerührt, danach abfiltriert und 3-mal mit je 60 g Isopropanol gewaschen. Nachfolgend wurde die Probe im Vakuumofen bei 60°C während 2 h getrocknet.

Herstellung der Probe 35: Erfindungsgemäße Oberflächenmodifizierung mittels einer Silanisierung in Pentandiol als Reaktivlösemittel

15 g unbeschichtetes Aluminiumpigment Powdal 340 wurden in 60 g Pentandiol für 30 min bei 0,15 m/s dispergiert und auf 80°C aufgeheizt. Zu dieser Dispersion wurden 2,25 g Tetraethoxysilan (TEOS) (entsprechend 15 Gew.-% bezogen auf das eingesetzte Pigment) und Triethylamin (TEA) in Form einer 10%-igen Dispersion (0,15 g TEA in 1,35 g Wasser, entsprechend 1 Gew.-% bezogen auf das eingesetzte Pigment) zugegeben. Diese Reaktionsmischung wurde 60 min lang bei 80°C unter Verwendung eines Rückflusskühlers, zur Vermeidung des Aufkonzentrierens der Reaktionsmischung, erhitzt. Das eingesetzte TEOS wird dabei zu Siliziumdioxid umgesetzt, welches eine Siliziumdioxid-Schicht an der Pigmentoberfläche ausbildet.

Danach wurden der Reaktionsmischung 0,15 g MEMO (entsprechend 1 Gew.-% bezogen auf das eingesetzte Pigment) zugegeben, für 30 min bei 80°C gerührt. Zur Verminderung der Viskosität wurde die Reaktionsmischung mit Isopropanol 1:1 (vol/vol) verdünnt, abfiltriert und 3-mal mit je 60 g Isopropanol gewaschen. Nachfolgend wurde die Probe im Vakuumofen bei 60°C während 2 h getrocknet.

Stofflich analytische Charakterisierungen der bei den unterschiedlichen Verfahren erhaltenen Oberflächenmodifizierungen:

Zur stofflich analytischen Charakterisierung der sich bei Anwendung der unterschiedlichen Verfahren ausbildenden Oberflächenmodifizierungen wurde von den oberflächenmodifizierten Pigmenten der Referenzprobe 17 und der Probe 35 jeweils eine Dispersion in Chloroform (3 Gew.-%) hergestellt und 24 h bei Raumtemperatur gerührt.

Anschließend wurden die Pigmente durch Filtration von der flüssigen Chloroform-Phase getrennt und das Chloroform bei 60°C im Vakuumofen abgezogen.

Von den dabei entstandenen getrockneten Extrakten der unterschiedlich oberflächenmodifizierten Pigmentproben (Referenzprobe 17 und Probe 35) wurden anschließend durch Transmissionsspektren (der Trockensubstanz) mit einem FT-IR-Mikroskop (Multiscope der Fa. Perkin Elmer) aufgenommen.

Das resultierende Transmissionsspektrum ist in der Figur 1 gezeigt. Es ist aus Figur 1 deutlich ersichtlich, dass der Extrakt der aus dem erfindungsgemäßen Verfahren unter Verwendung von Diolkomponenten (Probe 35) erhaltenen Oberflächenmodifizierung sich deutlich stofflich unterscheidet von dem Extrakt der herkömmlich silanisierten Referenzprobe 17.

Bei beiden Proben wurden starke Absorptionen im Bereich von ca. 8,3 $\mu$m gefunden, was auf C-O- und/oder Si-C-Gruppen hinweist.

Ein wesentlicher Unterschied in den Transmissionsspektren lässt sich in dem Extrakt für das erfindungsgemäß oberflächenmodifizierte Pigment (Probe 35) bei einer Wellenlänge von ca. 10,5 $\mu$m erkennen (1). Die verminderte Transmission ist charakteristisch für die Bildung von Si-O-Gruppen. Zusätzlich tritt bei der Probe 35 eine Komponente (2) im Spektrum in Figur 1 entsprechend einer organischen C-O-Gruppierung bei einer Wellenlänge von ca. 6,7 $\mu$m auf.

Auch die Pigmentproben selbst wurden vor und nach der Extraktion mit Chloroform spektroskopisch untersucht. Es zeigt sich dabei, dass für die Referenzprobe 17 nach der Chloroform-Extraktion im Vergleich zur nicht extrahierten Probe im Spektrum keine wesentlichen Änderungen resultieren, während sich bei der Probe 35 bestimmte Komponenten, welche hohe Anteile an Siloxanbindungen aufweisen, als auch Verbindungen mit organischen C-O-Gruppen, aus der Beschichtung herauslösen. Dieselben herausgelösten Anteile tauchen im Spektrum von Figur 1 auch im Extrakt der Probe 35 auf.

Ferner wurden zusätzliche $^{13}$C und $^1$H-NMR Analysen an den von Chloroform befreiten Extrakten der Referenzprobe 17 und Probe 35 in CDCl$_3$ durchgeführt, bei denen für die Referenzprobe 17 nur sehr geringe Mengen an Alkylgruppenhaltigen Verbindungen nachgewiesen werden konnten, während für den Extrakt von der Probe 35 sich in großem Umfang Pentandiol-haltige Komponenten nachweisen lassen.

Ein zusätzlicher Vergleich wurde anhand von UV-VIS-Spektren von Chloroformextrakten, welche von den analogen Proben bei einer kurzzeitigen Belastung von nur 2 h erhalten wurden, durchgeführt. Es zeigt sich hier, dass für den Chloroformextrakt der Referenzprobe 17 keine wesentlichen Absorptionen erhalten werden, was für eine gegenüber Chloroform relativ inerte Pigmentbelegung spricht.

Für den entsprechenden Extrakt von Probe 35 wird jedoch eine deutliche Absorption im kurzwelligen UV-Bereich beobachtet, was ein Ablösen der Pigmentbelegung schon bei einer relativ kurzen Belastungsdauer von nur 2 h aufzeigt.

Als wesentliches Resultat der durchgeführten Untersuchungen in Beispiel 14 lässt sich somit feststellen, dass unter Verwendung von Diolkomponenten bei Silanisierungen gemäß dem erfindungsgemäßen Verfahren sich diese einpolymerisieren, wodurch eine sich von der herkömmlichen Oberflächenmodifikationen verschiedene Oberflächenmodifikation gebildet wird.

Die durchgeführten Untersuchungen zeigen, dass sich durch Einbringen von mehrwertigen Alkoholkomponenten neuartige Beschichtungen mit Komponenten bilden, welche sich insbesondere durch aggressive Lösemittel wie halogenierte Kohlenwasserstoffe lösen lassen.

Die Tatsache, dass die untersuchten Proben intensiv mit einem flüssigen monofunktionellen Alkohol (Isopropanol) gereinigt wurden, beweist auch, dass die erfindungsgemäße Pigmentbelegung unter Verwendung von mehrfachfunktionellen Alkoholkomponenten als Reaktivkomponente gegenüber nichthalogenierten Lösemitteln relativ inert ist.

Ein wesentliches Ziel der erfindungsgemäßen Pigmentbelegung stellt, wie bereits beschrieben, die Zurverfügungstellung eines Verfahrens und einer Methodik dar, bei der bevorzugt eine Vernetzung innerhalb der Modifizierungsschicht statt einer Anbindung an die Pigmentoberfläche stattfindet.

Die Untersuchungsergebnisse in Beispiel 14 zeigen deutlich, dass diese Vernetzung innerhalb der Pigmentmodifizierungsschicht mittels des erfindungsgemäßen Verfahrens möglich ist.

Ein ganz wesentlicher Vorteil gegenüber den Verfahren gemäß dem Stand der Technik besteht deshalb insbesondere darin, dass eine direkte chemische Anbindung der Modifizierungsschicht an die Pigmentoberfläche für das erfindungsgemäße Verfahren entfallen kann, was zur Folge hat, dass jegliche Partikeloberflächen, relativ unabhängig von deren Oberflächenstruktur und -chemie, einer erfindungsgemäßen organischen Modifizierung zugänglich gemacht werden können.

Ein weiterer Vorteil des erfindungsgemäßen Verfahrens besteht auch aufgrund der umfangreichen Auswahl- und Variationsmöglichkeiten von Silankomponenten mit den zur Verfügung stehenden mehrfachfunktionellen alkoholischen Reaktivkomponenten. Somit können über das erfindungsgemäße Verfahren unterschiedlichste und bisher nicht verwirklichte Pigmenteigenschaften zugänglich gemacht werden.

Hierbei sind insbesondere die unabhängige Steuerung des Verhältnisses von Hydrophilie und Hydrophobie sowie die organischen Anteile der Pigmentbelegung in Bezug auf die Vernetzungsdichte innerhalb der Schicht zu nennen.

Bei alleiniger Verwendung von Silanen als Modifizierungskomponenten hat es sich in der Praxis beispielsweise als schwierig erwiesen, eine Pigmentbelegung herzustellen, welche gleichzeitig eine starke Hydrophobierung und einen hohen Vernetzungsgrad aufweist, wenn die Pigmentmodifizierung zusätzlich noch ausreichend verträglich und benetzbar sein soll, um in wässrigen Beschichtungsformulierungen eingesetzt werden zu können.

Gerade in Bezug auf diesen Aspekt sind bei alleiniger Verwendung einer Silanisierung gemäß dem Stand der Technik dem Fachmann relativ enge Grenzen zur Verbesserung und Optimierung der Belegungsschicht gesetzt. Dieses Eigenschaftsprofil ist jedoch gerade für Aluminiumpigmente in Automobil-Hydrobasislacken oder für Zinkpigmente in wässrigen Korrosionsschutzgrundierungen besonders wichtig und elementar.

Unter Verwendung des erfindungsgemäßen Verfahrens ist gerade dieser für Metallpigmente besonders wichtige und elementare Aspekt besser optimierbar, da durch das Einpolymerisieren von mehrwertigen Alkoholkomponenten in die Silainsierungsschicht nicht nur durch die verwendeten Silankomponenten, sondern zusätzlich durch die Variation der mehrwertigen Alkoholkomponenten sowohl die Vernetzungsdichte, die Anteile des Netzwerks an unterschiedlichen organischen Komponenten als auch die Eigenschaften, welche aus dem Verhältnis von Hydrophilie und Hydrophobie resultieren, gezielt gesteuert werden können.

## Patentansprüche

1. Verfahren zur Oberflächenmodifizierung von pulverförmigen Partikeln, umfassend
   Einbringen der pulverförmigen Partikel in eine eine Silankomponente und eine flüssige alkoholische Komponente umfassende Reaktionsmischung, wobei die pulverförmigen Partikel eine $d_{50}$-Partikelgröße von 0,5 $\mu$m bis 500 $\mu$m aufweisen und wobei die flüssige alkoholische Komponente eine alkoholische Reaktivkomponente mit einer oder mehreren mehrfachfunktionellen Alkoholverbindungen umfasst und
   nachfolgendes chemisches Umsetzen der Silankomponente und der alkoholischen Reaktivkomponente in Gegenwart der Partikel, wobei beim Umsetzen gebildete Reaktionsprodukte auf der Oberfläche der Partikel unter Bildung einer primären Partikelpräparation abgelagert werden, welche in Pasten- oder Pulverform erhalten wird,
   wobei die Gewichtsanteile der pulverförmigen Partikel, bezogen auf das Gewicht der Partikelpräparation 48 bis 98,5 Gew.-% betragen,
   wobei der Gewichtsanteil der alkoholische Reaktivkomponente, bezogen auf das Gewicht der Partikel 0,01 Gew.-% bis 20 Gew.-% beträgt, und wobei der Gewichtsanteil der Silankomponente, bezogen auf das Gewicht der Partikel 0,01 Gew.-% bis 10 Gew.-% beträgt.

2. Verfahren nach Anspruch 1, **dadurch gekennzeichnet, dass** die erhaltene primäre Partikelpräparation zumindest ein weiteres Mal einer Oberflächenmodifizierung gemäß Anspruch 1 unterzogen wird.

3. Verfahren nach Anspruch 1 oder 2, **dadurch gekennzeichnet, dass** die Silankomponente eine Alkoxysilanverbindung umfasst, welche mit einer oder mehreren Gruppen funktionalisiert ist, wobei die Gruppe(n) ausgewählt sind aus nicht funktionalisierten und chemisch funktionalisierten Alkylgruppen, olefinischen Gruppen, insbesondere Vinyl-, Acryl-, Methacryl-, O-Allyl-, N-Allylgruppen, sowie Isocyanat-, Amino-, Epoxy-, Carbonsäureanhydrid- und Carbonsäureestergruppen.

4. Verfahren nach einem der Ansprüche 1 bis 3, **dadurch gekennzeichnet, dass** die alkoholische Reaktivkomponente einen Anteil von 0,3 Gew.-% oder mehr, weiter bevorzugt einen Anteil von 35 Gew.-% oder mehr, am meisten bevorzugt einen Anteil von 90 Gew.-% oder mehr an der flüssigen alkoholischen Komponente bildet,
   wobei optional die mehrfachfunktionellen Alkoholverbindungen einen Schmelzpunkt von 80°C oder weniger, insbesondere 25°C oder weniger aufweisen,
   und/oder wobei die mehrfachfunktionellen Alkoholverbindungen ausgewählt sind aus Verbindungen mit einem Molekulargewicht von 400 g/mol oder weniger, insbesondere 250 g/mol oder weniger, am meisten bevorzugt von 160 g/mol oder weniger.

5. Verfahren nach einem der Ansprüche 1 bis 4, **dadurch gekennzeichnet, dass** die flüssige alkoholische Komponente im Wesentlichen vollständig aus der alkoholischen Reaktivkomponente besteht
und/oder dass als flüssige alkoholische Komponente eine Mischung von einem oder mehreren leichter flüchtigen monofunktionellen Alkoholen mit einem Siedepunkt von 100°C oder weniger und der alkoholischen Reaktivkomponente in Form von einem oder mehreren schwerer flüchtigen mehrfachfunktionellen Alkoholen mit einem Siedepunkt von 150°C oder mehr verwendet wird, wobei die Mischung insbesondere eine Mischung von einem oder mehreren monofunktionellen leichter flüchtigen Alkoholen mit schwerer flüchtigen Diolen und Triolen ist,
und/oder dass die flüssige alkoholische Komponente Ammoniak und/oder eine oder mehrere Stickstoff-, insbesondere aminofunktionelle organische Verbindungen enthält mit Anteilen von 0,1 Gew.-% bis 500 Gew.-%, insbesondere mit Anteilen von 1 Gew.-% bis 200 Gew.-%, weiter bevorzugt mit Anteilen von 10 bis 170 Gew.-%, bezogen auf die Anteile der alkoholischen Reaktivkomponente.

6. Verfahren nach einem der Ansprüche 1 bis 5, **dadurch gekennzeichnet, dass** eine gegebenenfalls in der flüssigen alkoholischen Komponente enthaltene monofunktionelle leichtflüchtige Alkoholverbindung bei einer Temperatur unterhalb des Siedepunkts der mehrfachfunktionellen Alkoholverbindung verdampft wird.

7. Verfahren nach einem der Ansprüche 1 bis 6, **dadurch gekennzeichnet, dass** als pulverförmige Partikel granulare Partikel, insbesondere sphärische Partikel, oder plättchenförmige Partikel, insbesondere plättchenförmige Pigmente und Metallpartikel, bevorzugt plättchenförmige Metallpigmente auf der Basis von Aluminium, Zink, Kupfer sowie Zink- und Kupferlegierungen, verwendet werden.

8. Verfahren nach einem der Ansprüche 1 bis 7, **dadurch gekennzeichnet, dass** die Partikelpräparation pulverförmig ist,
wobei optional die Gewichtsanteile der pulverförmigen Partikel, bezogen auf das Gewicht der Partikelpräparation 70 bis 98,5 Gew.-% betragen.

9. Verfahren nach einem der Ansprüche 1 bis 8, **dadurch gekennzeichnet, dass** der Gewichtsanteil der Silankomponente, bezogen auf das Gewicht der Partikel 0,1 Gew.-% bis 8 Gew.-%, weiter bevorzugt 1 Gew.-% bis 7 Gew.-% beträgt,
und/oder dass der Gewichtsanteil der alkoholischen Reaktivkomponente, bezogen auf das Gewicht der Partikel 0,03 Gew.-% bis 12 Gew.-%, weiter bevorzugt 0,08 Gew.-% bis 8 Gew.-%, am meisten bevorzugt 0,2 bis 5 Gew.-% beträgt.

10. Verfahren nach einem der Ansprüche 1 bis 9, **dadurch gekennzeichnet, dass** die Reaktionsmischung einen Anteil an einem oder mehreren Additiven im Bereich von 0,1 Gew.-% bis 20 Gew.-%, insbesondere 1 Gew.-% bis 10 Gew.-%, weiter bevorzugt 3 Gew.-% bis 6 Gew.-% enthält,
bezogen auf den Anteil der alkoholischen Reaktivkomponente, wobei die Additive vorzugsweise ausgewählt sind aus Benetzungs-, Dispergier- und Rheologieadditiven, UV-Schutzmitteln, Infrarotabsorbern, organischen und anorganischen Farbmitteln, Nanopartikeln, antibakteriellen Zusätzen, Korrosionsinhibitoren und Stoffen zur Erhöhung der Wärme- und elektrischen Leitfähigkeit.

11. Verfahren nach einem der Ansprüche 1 bis 10, **dadurch gekennzeichnet, dass** in der ersten Verfahrensstufe zur Herstellung der primären Partikelpräparation eine Silankomponente verwendet wird, welche ein mit Aminogruppen funktionalisiertes Alkoxysilan umfasst, und dass in einer zweiten Verfahrensstufe monomere, oligomere oder polymere Verbindungen an die Partikel der Partikelpräparation chemisch angebunden werden, insbesondere über funktionelle Gruppen, insbesondere funktionelle Endgruppen, dieser Verbindungen, wobei die funktionellen Gruppen ausgewählt sind aus Epoxy-, Carboxyl-, Halogen-, Hydroxyl-, Säureanhydrid-, Carbonsäureester- und Carbonsäurehalogenidgruppen, sowie olefinisch ungesättigten Gruppen, insbesondere Acrylat- und Methacrylatgruppen.

12. Verfahren nach einem der Ansprüche 1 bis 10, **dadurch gekennzeichnet, dass** in einer ersten Verfahrensstufe zur Herstellung der primären Partikelpräparation eine Silankomponente verwendet wird, welche ein mit olefinischen Gruppen funktionalisiertes Alkoxysilan umfasst, und dass in einer zweiten Verfahrensstufe eine chemische Anbindung von olefinisch ungesättigen Monomeren, oligomeren oder polymeren Verbindungen durch radikalische Polymerisation an die abgelagerten Reaktionsprodukte der primären Partikelpräparation erfolgt,
optional, dass die olefinisch ungesättigten Gruppen der Monomeren, oligomeren oder polymeren Verbindungen ausgewählt sind aus Acryl-, Methacryl-, Vinyl-, und Allylgruppen, wobei O-Allylgruppen und insbesondere N-Allylgruppen besonders bevorzugt sind.

**13.** Partikelpräparation hergestellt nach einem Verfahren gemäß einem der Ansprüche 11 oder 12, wobei das Gewichtsverhältnis der in der ersten Verfahrensstufe abgelagerten Reaktionsprodukte zu den in der zweiten Verfahrensstufe chemisch angebundenen Reaktionsprodukte 1:2 oder größer, insbesondere 2:1 oder größer ist.

**14.** Verwendung einer Partikelpräparation gemäß Anspruch 13 oder hergestellt gemäß einem der Verfahren der Ansprüche 1 bis 12 als Additive für Baustoffe, als Filtermaterialien, insbesondere im Bereich der Wasseraufbereitung, als Additive für Reinigungs- und/oder Scheuermittel, als Pflanz- und Bodensubstrate, als Streumittel für die Tierhaltung, als Additive für Kosmetika, als Zusätze zu Korrosionsschutzmitteln, Kunststoffen und Beschichtungsmassen, insbesondere für Pulverlack-und Flüssiglackbeschichtungen, weiter bevorzugt in Polyurethan-, Polyacrylat- und Polyesterbeschichtungen.

**15.** Zusammensetzung, insbesondere in Form von Baustoffen, Filtermaterialien, Pflanz- und Bodensubstrate, Kosmetika, Kunststoff-Compounds, Beschichtungszusammensetzungen, umfassend eine Partikelpräparation gemäß Anspruch 13 oder hergestellt gemäß einem der Verfahren der Ansprüche 1 bis 12.


**Claims**

**1.** A method for modifying the surface of powdery particles, said method comprising
introducing the powdery particles into a reaction mixture comprising a silane component and a liquid alcoholic component, wherein the powdery particles have a $d_{50}$ particle size of from 0.5 $\mu$m to 500 $\mu$m, and wherein the liquid alcoholic component comprises an alcoholic reactive component with one or more polyfunctional alcohol compounds, and
then chemically transforming the silane component and the alcoholic reactive component in the presence of the particles, wherein reaction products formed during the transformation are deposited on the surface of the particles, a primary particle preparation thus being formed, which is obtained in the form of a paste or powder,
wherein the proportions by weight of the powdery particles, in relation to the weight of the particle preparation, are 48 to 98.5 % by weight, wherein the proportion by weight of the alcoholic reactive component, in relation to the weight of the particles, is 0.01 % by weight to 20 % by weight, and
wherein the proportion by weight of the silane component, in relation to the weight of the particles, is 0.01 % by weight to 10 % by weight.

**2.** A method according to claim 1, **characterised in that** the obtained primary particle preparation is subjected at least one further time to a surface modification according to claim 1.

**3.** A method according to claim 1 or 2, **characterised in that** the silane component comprises an alkxoy silane compound which is functionalised with one or more groups, wherein the group(s) are selected from non-functionalised and chemically functionalised alkyl groups, olefinic groups, in particular vinyl, acryl, methacryl, O-allyl, N-allyl groups, and isocyanate, amino, epoxy, carboxylic acid anhydride and carboxylic acid ester groups.

**4.** A method according to any one of claims 1 to 3, **characterised in that** the alcoholic reactive component forms a proportion of 0.3 % by weight or more, more preferably a proportion of 35 % by weight or more, most preferably a proportion of 90 % by weight or more of the liquid alcoholic component,
wherein optionally the polyfunctional alcohol compounds have a melting point of 80°C or less, in particular 25°C or less,
and/or wherein the polyfunctional alcohol compounds are selected from compounds having a molecular weight of 400 g/mol or less, in particular 250 g/mol or less, most preferably of 160 g/mol or less.

**5.** A method according to any one of claims 1 to 4, **characterised in that** the liquid alcoholic component consists substantially completely of the alcoholic reactive component,
and/or **in that** a mixture of one or more monofunctional alcohols that are more volatile and have a boiling point of 100°C or less and of the alcoholic reactive component in the form of one or more polyfunctional alcohols that are less volatile and have a boiling point of 150°C or more is used as liquid alcoholic component, wherein the mixture in particular is a mixture of one or more monofunctional alcohols that are more volatile with diols and triols that are less volatile,
and/or **in that** the liquid alcoholic component contains ammonia and/or one or more nitrogen compounds, in particular aminofunctional organic compounds in proportions of from 0.1 % by weight to 500 % by weight, in particular in proportions of from 1 % by weight to 200 % by weight, more preferably in proportions of from 10 to 170 % by weight, in relation to the proportions of the alcoholic reactive component.

6. A method according to any one of claims 1 to 5, **characterised in that** a monofunctional alcohol compound that is more volatile and that is optionally contained in the liquid alcoholic component is vaporised at a temperature below the boiling point of the polyfunctional alcohol compound.

7. A method according to any one of claims 1 to 6, **characterised in that** there are used as powdery particles granular particles, in particular spherical particles, or platelet-shaped particles, in particular platelet-shaped pigments and metal particles, preferably platelet-shaped metal pigments based on aluminium, zinc, copper and zinc and copper alloys.

8. A method according to any one of claims 1 to 7, **characterised in that** the particle preparation is powdery, wherein the proportions by weight of the powdery particles, in relation to the weight of the particle preparation, optionally are 70 to 98.5 % by weight.

9. A method according to any one of claims 1 to 8, **characterised in that** the proportion by weight of the silane component, in relation to the weight of the particles, is 0.1 % by weight to 8 % by weight, more preferably 1 % by weight to 7 % by weight, and/or **in that** the proportion by weight of the alcoholic reactive component, in relation to the weight of the particles, is 0.03 % by weight to 12 % by weight, more preferably 0.08 % by weight to 8 % by weight, most preferably 0.2 to 5 % by weight.

10. A method according to any one of claims 1 to 9, **characterised in that** the reaction mixture contains a proportion of one or more additives in the range of from 0.1 % by weight to 20 % by weight, in particular 1 % by weight to 10 % by weight, more preferably 3 % by weight to 6 % by weight, in relation to the proportion of the alcoholic reactive component, wherein the additives are preferably selected from wetting agents, dispersants, and rheology additives, UV protection agents, infrared absorbers, organic and inorganic colourants, nanoparticles, antibacterial additives, corrosion inhibitors and substances for increasing the heat conductivity and electrical conductivity.

11. A method according to any one of claims 1 to 10, **characterised in that** in the first method step for producing the primary particle preparation a silane component is used which comprises an alkoxysilane functionalised with amino groups, and **in that** in a second method step monomeric, oligomeric or polymeric compounds are chemically bonded to the particles of the particle preparation, in particular via functional groups, in particular functional end groups, of these compounds, wherein the functional groups are selected from epoxy, carboxyl, halogen, hydroxyl, acid anhydride, carboxylic acid ester, and carboxylic acid halide groups, and olefinically unsaturated groups, in particular acrylate and methacrylate groups.

12. A method according to any one of claims 1 to 10, **characterised in that** in a first method step for producing the primary particle preparation a silane component is used which comprises an alkoxysilane functionalised with olefinic groups, and **in that** in a second method step olefinically unsaturated monomers, oligomeric or polymeric compounds are chemically bonded by radical polymerisation to the deposited reaction products of the primary particle preparation, optionally **in that** the olefinically unsaturated groups of the monomers, oligomeric or polymeric compounds are selected from acryl, methacryl, vinyl and allyl groups, wherein O-allyl groups and in particular N-allyl groups are particularly preferred.

13. A particle preparation produced by a method according to either one of claims 11 or 12, wherein the ratio by weight of the reaction products deposited in the first method step to the reaction products chemically bonded in the second method step is 1:2 or greater, in particular 2:1 or greater.

14. Use of a particle preparation according to claim 13 or produced in accordance with one of the methods of claims 1 to 12 as additives for building materials, as filter materials, in particular in the field of water treatment, as additives for cleaning and/or scouring agents, as plant and soil substrates, as spreading materials for animal farming, as additives for cosmetics, as supplements for anti-corrosion agents, plastics materials and coating compounds, in particular for powder paint and liquid paint coatings, more preferably in polyurethane, polyacrylate and polyester coatings.

**15.** A composition, in particular in the form of building materials, filter materials, plant and soil substrates, cosmetics, plastics material compounds, coating compositions, comprising a particle preparation according to claim 13 or produced in accordance with one of the methods of claims 1 to 12.

**Revendications**

**1.** Procédé de modification de surfaces de particules pulvérulentes, comprenant
l'intégration de particules pulvérulentes dans un mélange réactionnel comprenant un composant silane et un composant alcoolique liquide, les particules pulvérulentes présentant une taille de particule $d_{50}$ de 0,5 $\mu$m à 500 $\mu$m et le composant alcoolique liquide comprenant un composant réactif alcoolique ayant un ou plusieurs composés d'alcool polyfonctionnels et
la conversion chimique consécutive du composant silane et du composant réactif alcoolique en présence de particules, les produits réactionnels formés lors de la conversion se déposant à la surface des particules en formant une préparation de particules primaires, qui est obtenue sous forme de pâte ou de poudre,
dans lequel les proportions en poids des particules pulvérulentes, par rapport au poids de la préparation de particules, vont de 48 à 98,5 % en poids,
dans lequel la proportion en poids du composant réactif alcoolique, par rapport au poids des particules, va de 0,01 % en poids à 20 % en poids, et
dans lequel la proportion en poids du composant silane, par rapport au poids des particules, va de 0,01 % en poids à 10 % en poids.

**2.** Procédé selon la revendication 1, **caractérisé en ce que** la préparation de particules primaires obtenue est soumise au moins une autre fois à une modification de surfaces selon la revendication 1.

**3.** Procédé selon la revendication 1 ou 2, **caractérisé en ce que** le composant silane comprend un composé d'alcoxysilane, qui est fonctionnalisé avec un ou plusieurs groupes, le ou les groupes étant choisis parmi les groupes alkyle non fonctionnalisés et chimiquement fonctionnalisés, les groupes oléfiniques, en particulier les groupes vinyliques, acryliques, méthacryliques, O-allyliques, N-allyliques, ainsi que les groupes isocyanate, amino, époxy, anhydride d'acide carboxylique, et ester d'acide carboxylique.

**4.** Procédé selon l'une des revendications 1 à 3, **caractérisé en ce que** le composant réactif alcoolique forme une proportion de 0,3 % en poids, ou plus, de manière mieux préférée une proportion de 35 % en poids ou plus, de manière la mieux préférée une proportion de 90 % en poids ou plus du composant alcoolique liquide,
dans lequel les composés d'alcool polyfonctionnels présentent optionnellement un point de fusion de 80°C ou moins, notamment de 25°C ou moins,
et/ou dans lequel les composés d'alcool polyfonctionnels sont choisis parmi les composés ayant un poids moléculaire de 400 g/mol ou moins, en particulier de 250 g/mol ou moins, de manière la mieux préférée de 160 g/mol ou moins.

**5.** Procédé selon l'une des revendications 1 à 4, **caractérisé en ce que** le composant alcoolique liquide se compose sensiblement totalement du composant réactif alcoolique
et/ou **en ce que** l'on utilise comme composant alcoolique liquide un mélange d'un ou de plusieurs alcools monofonctionnels plus facilement volatils, ayant un point d'ébullition de 100°C ou moins, et du composant réactif alcoolique sous la forme d'un ou de plusieurs alcools polyfonctionnels plus difficilement volatils, ayant un point d'ébullition de 150°C ou plus, le mélange étant notamment un mélange d'un ou de plusieurs alcools monofonctionnels plus facilement volatils avec des diols et des triols plus difficilement volatils,
et/ou **en ce que** le composant alcoolique liquide contient de l'ammoniac et/ou un ou plusieurs composés organiques d'azote, notamment à fonction amino, en des proportions de 0,1 % en poids à 500 % en poids, en particulier des proportions de 1 % en poids à 200 % en poids, de manière mieux préférée des proportions de 10 à 170 % en poids, par rapport aux proportions de composant réactif alcoolique.

**6.** Procédé selon l'une des revendications 1 à 5, **caractérisé en ce qu'**un composé d'alcool monofonctionnel facilement volatil contenu le cas échéant dans le composant alcoolique liquide est évaporé à une température située en dessous du point d'ébullition du composé d'alcool polyfonctionnel.

**7.** Procédé selon l'une des revendications 1 à 6, **caractérisé en ce que** l'on utilise comme particules pulvérulentes des particules granulaires, en particulier des particules sphériques, ou des particules lamellaires, en particulier des pigments lamellaires et des particules métalliques, de préférence des pigments métalliques lamellaires à base d'aluminium, de zinc, de cuivre ou d'alliages de zinc et de cuivre.

8. Procédé selon l'une des revendications 1 à 7, **caractérisé en ce que** la préparation de particules est pulvérulente, dans lequel les proportions en poids des particules pulvérulentes représentent optionnellement 70 à 98,5 % en poids, par rapport au poids de la préparation de particules.

9. Procédé selon l'une des revendications 1 à 8, **caractérisé en ce que** la proportion en poids du composant silane, par rapport au poids des particules, est de 0,1 % en poids à 8 % en poids, de manière mieux préférée de 1 % en poids à 7 % en poids,
et/ou **en ce que** la proportion en poids du composant réactif alcoolique, par rapport au poids des particules, est de 0,03 % en poids à 12 % en poids, de manière mieux préférée de 0,08 % en poids à 8 % en poids, de manière la mieux préférée de 0,2 à 5 % en poids.

10. Procédé selon l'une des revendications 1 à 9, **caractérisé en ce que** le mélange réactionnel contient une proportion d'un ou de plusieurs additifs dans la plage de 0,1 % en poids à 20 % en poids, en particulier de 1 % en poids à 10 % en poids, de manière plus préférée de 3 % en poids à 6 % en poids, par rapport à la proportion du composant réactif alcoolique, dans lequel les additifs sont de préférence choisis parmi les additifs de mouillage, de dispersion et de rhéologie, les agents protecteurs anti-UV, les absorbeurs d'infrarouge, les colorants organiques et inorganiques, les nanoparticules, les agents antibactériens, les inhibiteurs de corrosion et les substances permettant d'augmenter la conductivité thermique et électrique.

11. Procédé selon l'une des revendications 1 à 10, **caractérisé en ce que** l'on utilise, lors de la première étape du procédé de fabrication de la préparation de particules primaires, un composant silane qui comprend un alcoxysilane fonctionnalisé avec des groupes amino, et **en ce que**, lors d'une deuxième étape de procédé, des composés monomères, oligomères ou polymères sont liés chimiquement aux particules de la préparation de particules, en particulier par le biais de groupes fonctionnels, en particulier de groupes terminaux fonctionnels, de ces composés, dans lequel les groupes fonctionnels sont choisis parmi les groupes époxy, carboxyle, halogène, hydroxyle, anhydride d'acide, ester d'acide carboxylique et halogénure d'acide carboxylique, ainsi que des groupes oléfiniquement insaturés, en particulier les groupes acrylate et méthacrylate.

12. Procédé selon l'une des revendications 1 à 10, **caractérisé en ce que** l'on utilise, lors d'une première étape du procédé de fabrication de la préparation de particules primaires, un composant silane qui comprend un alcoxysilane fonctionnalisé avec des groupes oléfiniques, et **en ce que**, lors d'une deuxième étape de procédé, une liaison chimique de composés monomères, oligomères ou polymères oléfiniquement insaturés aux produits réactionnels de la préparation de particules déposés s'effectue par polymérisation radicalaire,
optionnellement **en ce que** les groupes oléfiniquement insaturés des composés monomères, oligomères ou polymères sont choisis parmi les groupes acryliques, méthacryliques, vinyliques et allyliques, les groupes O-allyliques et en particulier les groupes N-allyliques étant particulièrement préférés.

13. Préparation de particules fabriquée selon un procédé selon l'une des revendications 11 ou 12, dans laquelle le rapport en poids des produits réactionnels déposés lors de la première étape de procédé sur les produits réactionnels liés chimiquement lors de la deuxième étape de procédé est de 1/2 ou plus, en particulier de 2/1 ou plus.

14. Utilisation d'une préparation de particules selon la revendication 13 ou fabriquée selon l'un des procédés des revendications 1 à 12 en tant qu'additifs pour des matériaux de construction, en tant que matériaux filtrants, en particulier dans le domaine du traitement de l'eau, en tant qu'additifs pour des agents de nettoyage et/ou de récurage, en tant que substrats de plantes et de sols, en tant que litière pour l'élevage, en tant qu'additifs pour des produits cosmétiques, en tant qu'additifs pour les agents anti-corrosion, les plastiques et pâtes de revêtement, en particulier pour les revêtements de laque pulvérulente et laque liquide, de manière mieux préférée dans des revêtements en polyuréthane, polyacrylate et polyester.

15. Composition, en particulier sous la forme de matériaux de construction, matériaux filtrants, substrats de plantes et de sols, produits cosmétiques, composites de plastique, compositions de revêtement, comprenant une préparation de particules selon la revendication 13 ou fabriquée selon l'un des procédés des revendications 1 à 12.

**FIGUR 1**

········ Chloroform-Extrakt Referenzprobe 17

———— Chloroform-Extrakt Probe 35

EP 2 838 960 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0634459 A2
- WO 2008095697 A1
- EP 0688833 A2
- EP 0477433 A2
- EP 1812519 A2
- EP 1084198 A1
- WO 2005075578 A2
- WO 2010063430 A1
- EP 1084198 A2

**In der Beschreibung aufgeführte Nicht-Patentliteratur**

- **A. ALBRECHT ; U. A. HIRTH ; B. SCHREIBER.** *Farbe und Lack,* 2008, vol. 9, 52-56